# EUROPEAN PATENT APPLICATION

(11) **EP 4 836 566 A1**
(43) Date of publication of application: **04.11.2026**
(21) Application number: 24919960.5
(22) Date of filing: 18.12.2024
(51) Int. Cl.: H04W 72/1268

(54) **COMMUNICATION METHOD AND APPARATUS**

(30) Priority: 25.01.2024 CN 202410114355
(71) Applicant: Huawei Technologies Co., Ltd., Shenzhen, Guangdong 518129 (CN)
(72) Inventor: LI, Ying, Shenzhen, Guangdong 518129 (CN); HUANG, Lei, Shenzhen, Guangdong 518129 (CN); LI, Yunbo, Shenzhen, Guangdong 518129 (CN); GUO, Ziyang, Shenzhen, Guangdong 518129 (CN)
(74) Representative: Isarpatent
(86) International application number: PCT/CN2024/140315
(87) International publication number: WO 2025/156882

(57) **Abstract**

This application relates to a communication method and apparatus. An access point device transmits a trigger frame, where the trigger frame is used to trigger a first station to transmit first uplink data, and the first station is a station incapable of transmitting first information. The access point device transmits the first information, and/or the trigger frame is further used to trigger a second station to transmit the first information, where the first information is used to cause a third station not to transmit data when the first station transmits uplink data. The access point device receives the first uplink data from the first station. In embodiments of this application, it is equivalent that the access point device and/or the second station may replace the first station incapable of transmitting the first information to transmit the first information, thereby reducing interference when the first station transmits data.

## Description

### CROSS-REFERENCE TO RELATED APPLICATIONS

This application claims priority to Chinese Patent Application No. 202410114355.7, filed with the China National Intellectual Property Administration on January 25, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A physical layer protocol data unit (PHY protocol data unit, PPDU) includes a legacy preamble (legacy preamble). Transmitting the legacy preamble may cause a station (station, STA) receiving the legacy preamble to keep silent within a transmission period of the PPDU, thereby reducing interference.

However, some STAs cannot transmit the legacy preamble. In this case, when these STAs transmit a PPDU, relatively severe interference may be caused due to incapability of transmitting the legacy preamble.

### SUMMARY

Embodiments of this application provide a communication method and apparatus for reducing interference when an AMP device transmits a PPDU.

According to a first aspect, a first communication method is provided. The method may be performed by an access point device (for example, an AP) or a chip system. The chip system can implement a function of the access point device. The method includes: transmitting a trigger frame, where the trigger frame is used to trigger a first station to transmit first uplink data, and the first station is a station that is unable to transmit first information; transmitting the first information, and/or the trigger frame is further used to trigger a second station to transmit the first information, where the first information is used to cause a third station not to transmit data when the first station transmits the uplink data, and the third station is the second station, or the third station is at least one station other than the first station and the second station; and receiving the first uplink data from the first station.

In embodiments of this application, an access point device may transmit first information and/or trigger a second station to transmit the first information. Based on the first information, a third station is caused not to transmit data when a first station transmits uplink data, for example, the third station keeps silent during transmission of the uplink data by the first station. This is equivalent to that the access point device and/or the second station replaces the first station to transmit the first information, thereby reducing interference during transmission of data by the first station.

In an optional implementation, transmitting the trigger frame includes: transmitting the trigger frame in a first bandwidth; transmitting the first information includes: transmitting the first information in a second bandwidth, where the first bandwidth is smaller than the second bandwidth; and receiving the first uplink data from the first station includes: receiving the first uplink data from the first station in the first bandwidth. For example, the first station does not support transmission of uplink data in the second bandwidth, and therefore may transmit the uplink data in the first bandwidth. The trigger frame may also be transmitted in the first bandwidth, so that both the first station and the second station can receive the trigger frame. In addition, the first information may be transmitted in the second bandwidth to meet the transmission requirement of the first information.

In an optional implementation, transmitting the first information includes: transmitting the first information when a SIFS elapses after completion of transmission of the trigger frame. The SIFS corresponds to processing time of a receiving end of the trigger frame, for example, the first station or the first station and the second station. That is, it is generally considered that after the access point device completes transmission of the trigger frame and the SIFS elapses, the receiving end of the trigger frame has completed reception of the trigger frame. In other words, a time point at which the access point device completes waiting for the SIFS and a time point at which the receiving end completes reception of the trigger frame may be aligned.

In an optional implementation, the first information includes a legacy preamble or a short frame, and the short frame includes the legacy preamble and a frame body. It is equivalent to that the access point device and/or the second station in embodiments of this application may transmit only the legacy preamble, or transmit complete information (the short frame) including the legacy preamble, thereby providing flexibility.

In an optional implementation, the legacy preamble includes L-STF, L-LTF, and L-SIG; or the legacy preamble includes L-STF, L-LTF, L-SIG, BPSK-mark1, and BPSK-mark2. If the legacy preamble includes L-STF, L-LTF, and L-SIG, the duration of the legacy preamble is shorter, so that the waiting time for the first station is reduced, and the efficiency of uplink data transmission is improved. Alternatively, if the legacy preamble includes L-STF, L-LTF, L-SIG, BPSK-mark1, and BPSK-mark2, the legacy preamble has an automatic detection characteristic. A receiving end of the legacy preamble may determine, according to a format and/or a demodulation manner of the legacy preamble, whether the legacy preamble is a legacy preamble to be received by the receiving end, or may distinguish the legacy preamble from legacy preambles of other versions.

In an optional implementation, the short frame includes CTS, NDP, or ACK. In addition, the short frame may have other implementations, which are not limited herein.

In an optional implementation, the method further includes: transmitting an excitation signal, and/or the trigger frame is further used to trigger the second station to transmit the excitation signal, where the excitation signal is used to provide energy for transmitting the first uplink data to the first station. For example, for a station that does not have an energy storage capability or that has a limited energy storage capability, uplink data may fail to be transmitted using energy provided by the station itself, and uplink data may need to be transmitted by using a backscatter (backscatter) method. In this case, for such type of device, the access point device and/or the second station may transmit the excitation signal, so that the first station can obtain energy from the excitation signal to transmit the uplink data.

In an optional implementation, the trigger frame used to trigger the first station to transmit uplink data includes: when the first information is transmitted by the access point device, the trigger frame includes at least one user information field, and one of the at least one user information field includes a user identification field, the user identification field is used to indicate the first station, and the trigger frame is used to indicate the first station to transmit the first uplink data. If the first information is transmitted by the access point device, the trigger frame may not necessarily trigger the second station, for example, the trigger frame may not necessarily include related information (such as an identifier) of the second station. The trigger frame needs to trigger the first station to transmit uplink data; therefore, the trigger frame may include information of the first station. For example, the user identification field in one user information field of the at least one user information field includes an identifier of the first station, thereby indicating the first station.

In an optional implementation, that the trigger frame is further used to trigger the second station to transmit the first information includes: The trigger frame includes at least one user information field, where one user information field of the at least one user information field includes a user identification field and a user type field, the user identification field is used to indicate the second station, and the user type field is used to indicate to transmit the first information. For example, the user identification field may include an identifier of the second station, and the user type field may indicate a behavior of the second station (for example, transmitting the first information), so that the user information field is equivalent to indicating (or triggering) the second station to transmit the first information.

In an optional implementation, at least two fields among other fields other than the user identification field in the user information field are reserved fields. The format of the user information field in embodiments of this application may be obtained by updating a format of a conventional user information field. For embodiments of this application, fields other than the user identification field in the user information field may not be used (the user information field in embodiments of this application may include a user type field, or may not include the user type field. Optionally, the user type field may be a newly added field in the user information field, and thus may not belong to the conventional user information field. Therefore, the "fields other than the user identification field" herein may not include the user type field). Therefore, in embodiments of this application, at least two fields other than the user information field in the user information field may be configured as reserved fields, so that valid values do not need to be set for the at least two fields, thereby simplifying implementation of the access point and the station.

In an optional implementation, a common information field of the trigger frame includes a trigger type field, and a value of the trigger type field is a first value, where the first value is used to indicate that the trigger frame is used to trigger a station that is unable to transmit the first information to transmit uplink data. Embodiments of this application extend the values of the trigger type field, so that the trigger type field is capable of indicating more types of information, and also enables the trigger frame to support triggering of a first-type station.

In an optional implementation, a value range of the first value is [9, 15]. For example, the trigger type field occupies 4 bits, and the 4 bits have 16 values, or 16 states in total, where states 0 to 8 have been defined, and the remaining states 9 to 15 are reserved. Optionally, the value range of the first value is, for example, [9, 15], which is equivalent to that in embodiments of this application, reserved values of the trigger type field may be used as the first value, without expanding the number of bits occupied by the trigger type field, thereby achieving better compatibility with existing technologies.

In an optional implementation, the common information field further includes an uplink length field, used to indicate a length of the first uplink data, where at least six fields among other fields other than the trigger type field and the uplink length field in the common information field are reserved fields. In embodiments of this application, except for the trigger type field and the uplink length field, other fields in the common information field may not be used. Therefore, in embodiments of this application, at least six fields other than the trigger type field and the uplink length field in the common information field may be configured as reserved fields, so that valid values do not need to be set for the at least six fields, thereby simplifying implementation of an access point device and a station.

In an optional implementation, the trigger frame includes at least one first user information field, each first user information field of the at least one first user information field is used to indicate one station incapable of transmitting the first information, one first user information field of the at least one first user information field is used to indicate the first station, and the trigger frame is used to indicate the first station to transmit the first uplink data.

In an optional implementation, the trigger frame includes at least one second user information field, each second user information field of the at least one second user information field is used to indicate one station that is used to transmit the first information and/or that is used to transmit an excitation signal to a station incapable of transmitting the first information, and one second user information field of the at least one second user information field is used to indicate the second station.

For example, a format of the trigger frame is a format newly defined in embodiments of this application. In this format, the first-type station and the second-type station may be separated and indicated by different (or different types of) user information fields, so that indication of different types of stations is clearer.

In an optional implementation, the first uplink data uses a first spreading code. For example, the access point device triggers, by using the trigger frame, a plurality of first-type stations to transmit uplink data (the first station is one of the plurality of first-type stations). In this case, optionally, different stations may use different spreading codes to transmit uplink data, so as to reduce collisions.

According to a second aspect, a second communication method is provided. The method may be performed by a station device (for example, a STA) or a chip system. The chip system can implement a function of the station device. The station is, for example, a first-type station, such as the first station. The method includes: receiving a trigger frame, where the trigger frame is used to trigger the first station to transmit first uplink data, and the first station is a station that is unable to transmit first information; and transmitting the first uplink data after waiting for a first duration, where the first duration is greater than or equal to a duration of first information, and the first information is used to cause a third station not to transmit data when the first station transmits the uplink data, where the third station is a second station, or the third station is at least one station other than the first station and the second station.

In an optional implementation, receiving the trigger frame includes: receiving the trigger frame on a first bandwidth; and transmitting first uplink data includes: transmitting the first uplink data on the first bandwidth.

In an optional implementation, the first information includes a legacy preamble or a short frame, and the short frame includes the legacy preamble and a frame body.

In an optional implementation, the legacy preamble includes L-STF, L-LTF, and L-SIG; or the legacy preamble includes L-STF, L-LTF, L-SIG, BPSK-mark1, and BPSK-mark2.

In an optional implementation, the short frame includes CTS, NDP, or ACK.

In an optional implementation, the first duration is a duration of the first information; or the first duration is a sum of the duration of the first information and a SIFS.

In an optional implementation, transmitting the first uplink data includes: receiving an excitation signal; and transmitting the first uplink data using energy provided by the excitation signal.

In an optional implementation, the trigger frame used to trigger the first station to transmit uplink data includes: the trigger frame includes at least one user information field, and one of the at least one user information field includes a user identification field, the user identification field is used to indicate the first station, and the trigger frame is used to indicate the first station to transmit the first uplink data.

In an optional implementation, at least two fields among other fields other than the user identification field in the user information field are reserved fields.

In an optional implementation, a common information field of the trigger frame includes a trigger type field, and a value of the trigger type field is a first value, where the first value is used to indicate that the trigger frame is used to trigger a station that is unable to transmit the first information to transmit uplink data.

In an optional implementation, a value range of the first value is [9, 15].

In an optional implementation, the common information field further includes an uplink length field, used to indicate a length of the first uplink data, where at least five fields other than the trigger type field and the uplink length field in the common information field are reserved fields.

In an optional implementation, the trigger frame includes at least one first user information field, each first user information field of the at least one first user information field is used to indicate one station incapable of transmitting the first information, one first user information field of the at least one first user information field is used to indicate the first station, and the trigger frame is used to indicate the first station to transmit the first uplink data.

In an optional implementation, the first uplink data uses a first spreading code.

For technical effects brought by the second aspect or the optional implementations, refer to the descriptions of the technical effects of the first aspect or the corresponding implementations.

According to a third aspect, a third communication method is provided. The method may be performed by a station device (for example, a STA) or a chip system. The chip system can implement a function of the station device. The station is, for example, a second-type station, such as the second station. The method includes: receiving a trigger frame, where the trigger frame is used to trigger the second station to transmit first information and/or an excitation signal, where the first information is used to cause a third station not to transmit data when the first station transmits first uplink data, and the excitation signal is used to provide energy for transmitting the first uplink data for the first station, where the third station is the second station, or the third station is at least one station other than the first station and the second station; and transmitting the first information and/or the excitation signal. Optionally, the first station is a station that is unable to transmit the first information.

In an optional implementation, receiving the trigger frame includes: receiving the trigger frame in a first bandwidth; and transmitting the first information includes: transmitting the first information in a second bandwidth, where the first bandwidth is smaller than the second bandwidth.

In an optional implementation, the first information includes a legacy preamble or a short frame, and the short frame includes the legacy preamble and a frame body.

In an optional implementation, the legacy preamble includes L-STF, L-LTF, and L-SIG; or the legacy preamble includes L-STF, L-LTF, L-SIG, BPSK-mark1, and BPSK-mark2.

In an optional implementation, the short frame includes CTS, NDP, or ACK.

In an optional implementation, the trigger frame is further used to trigger the second station to transmit the first information and/or the excitation signal, including: the trigger frame includes at least one user information field, and one of the at least one user information field includes a user identification field and a user type field, the user identification field is used to indicate the second station, and the user type field is used to indicate to transmit the first information and/or the excitation signal.

In an optional implementation, at least two fields among other fields other than the user identification field in the user information field are reserved fields.

In an optional implementation, the trigger frame includes at least one second user information field, each second user information field of the at least one second user information field is used to indicate one station that is used to transmit the first information and/or that is used to transmit an excitation signal to a station incapable of transmitting the first information, and one second user information field of the at least one second user information field is used to indicate the second station.

For technical effects brought by the third aspect or the optional implementations, refer to the descriptions of the technical effects of the first aspect or the corresponding implementations.

According to a fourth aspect, a communication apparatus is provided. The communication apparatus has a function of implementing behavior in the method embodiments in the first aspect. For beneficial effect, refer to the foregoing descriptions. Details are not described herein again.

The communication apparatus may be the access point device according to the first aspect, or an electronic device (for example, a chip system) configured in the access point device, or a larger device including the access point device. The communication apparatus includes corresponding means (means) or modules for performing the method described above. For example, the communication apparatus includes a processing unit (or referred to as a processing module) and a transceiver unit (or referred to as a transceiver module).

For example, the transceiver unit is configured to transmit a trigger frame, where the trigger frame is used to trigger a first station to transmit first uplink data, and the first station is a station that is unable to transmit first information; the transceiver unit is further configured to transmit the first information, and/or the trigger frame is further used to trigger a second station to transmit the first information, where the first information is used to cause a third station not to transmit data when the first station transmits the uplink data, and the third station is the second station, or the third station is at least one station other than the first station and the second station; and the transceiver unit is further configured to receive the first uplink data from the first station.

In an optional implementation, the communication apparatus includes a storage unit. The processing unit can be coupled to the storage unit, and execute a program or instructions in the storage unit, to enable the communication apparatus to perform a function of the access point device.

In an optional implementation, the communication apparatus includes a processor, coupled to a memory and configured to execute instructions in the memory, to implement the method performed by the access point device according to the first aspect. Optionally, the communication apparatus further includes other component, for example, an antenna, an input/output module, and an interface. Such components may be hardware, software, or a combination of software and hardware.

According to a fifth aspect, a communication apparatus is provided. The communication apparatus has a function of implementing behavior in the method embodiments in the second aspect. For beneficial effect, refer to the foregoing descriptions. Details are not described herein again.

The communication apparatus may be the first station described according to the second aspect, or may be an electronic device (for example, a chip system) configured in the first station, or may be a larger device including the first station. The communication apparatus includes corresponding means (means) or modules for performing the method described above. For example, the communication apparatus includes a processing unit (or referred to as a processing module) and a transceiver unit (or referred to as a transceiver module).

For example, the transceiver unit is configured to receive a trigger frame, where the trigger frame is used to trigger the first station to transmit first uplink data, and the first station is a station that is unable to transmit first information; and the transceiver unit is further configured to transmit the first uplink data after waiting for a first duration, where the first duration is greater than or equal to a duration of first information, and the first information is used to cause a third station not to transmit data when the first station transmits the uplink data, where the third station is a second station, or the third station is at least one station other than the first station and the second station.

In an optional implementation, the communication apparatus includes a storage unit. The processing unit can be coupled to the storage unit, and execute a program or instructions in the storage unit, to enable the communication apparatus to perform a function of the first station.

In an optional implementation, the communication apparatus includes a processor, coupled to a memory and configured to execute instructions in the memory, to implement the method performed by the first station according to the second aspect. Optionally, the communication apparatus further includes other component, for example, an antenna, an input/output module, and an interface. Such components may be hardware, software, or a combination of software and hardware.

According to a sixth aspect, a communication apparatus is provided. The communication apparatus has a function of implementing behavior in the method embodiments in the third aspect. For beneficial effect, refer to the foregoing descriptions. Details are not described herein again.

The communication apparatus may be the second station described according to the third aspect, or may be an electronic device (for example, a chip system) configured in the second station, or may be a larger device including the second station. The communication apparatus includes corresponding means (means) or modules for performing the method described above. For example, the communication apparatus includes a processing unit (or referred to as a processing module) and a transceiver unit (or referred to as a transceiver module).

For example, the transceiver unit is configured to receive a trigger frame, where the trigger frame is used to trigger the second station to transmit first information and/or an excitation signal, where the first information is used to cause a third station not to transmit data when the first station transmits first uplink data, and the excitation signal is used to provide energy for transmitting the first uplink data for the first station, where the third station is the second station, or the third station is at least one station other than the first station and the second station; and the transceiver unit is further configured to transmit the first information and/or the excitation signal. Optionally, the first station is a station that is unable to transmit the first information.

In an optional implementation, the communication apparatus includes a storage unit. The processing unit can be coupled to the storage unit, and execute a program or instructions in the storage unit, to enable the communication apparatus to perform a function of the second station.

In an optional implementation, the communication apparatus includes a processor, coupled to a memory and configured to execute instructions in the memory, to implement the method performed by the second station according to the third aspect. Optionally, the communication apparatus further includes other component, for example, an antenna, an input/output module, and an interface. Such components may be hardware, software, or a combination of software and hardware.

According to a seventh aspect, a communication apparatus is provided. The communication apparatus may be an access point device or a chip or a chip system used in the access point device. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the access point device in the first aspect.

According to an eighth aspect, a communication apparatus is provided. The communication apparatus may be a station device or a chip or a chip system used in the station device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method executed by the first station device in the second aspect described above.

According to a ninth aspect, a communication apparatus is provided. The communication apparatus may be a station device or a chip or a chip system used in the station device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method executed by the second station device in the third aspect described above.

According to a tenth aspect, a communication system is provided. The system may include an access point device and a first station. The access point device may perform the method performed by the access point device in the first aspect, and the first station may perform the method performed by the first station in the second aspect. Optionally, the access point device may be implemented by the communication apparatus described in the fourth aspect or the seventh aspect, and the first station may be implemented by the communication apparatus described in the fifth aspect or the eighth aspect.

In an optional implementation, the communication system further includes a second station, and the second station may perform the method performed by the second station in the third aspect. Optionally, the second station may be implemented by the communication apparatus described in the sixth aspect or the ninth aspect.

According to an eleventh aspect, a computer-readable storage medium is provided. The computer-readable storage medium is configured to store a computer program, and when the computer program is run on a computer, the computer is enabled to perform the method according to any one of the first aspect to the third aspect.

According to a twelfth aspect, a computer program product is provided. The computer program product includes a computer program, and when the computer program is run on a computer, the computer is enabled to perform the method according to any one of the first aspect to the third aspect.

According to a thirteenth aspect, a chip system is provided, including a processor and an interface. The processor is configured to invoke instructions from the interface and run the instructions, and when the processor executes the instructions, the method according to any one of the first aspect to the third aspect is implemented.

### BRIEF DESCRIPTION OF DRAWINGS

FIG. 1 is a diagram of a legacy preamble;
FIG. 2 is a diagram of an application scenario according to an embodiment of this application;
FIG. 3 is a flowchart of a communication method according to an embodiment of this application;
FIG. 4 is a diagram of a format of a first PPDU according to an embodiment of this application;
FIG. 5 is a diagram of a format of a trigger frame according to an embodiment of this application;
FIG. 6A is a diagram of a conventional format of a common information field in a trigger frame;
FIG. 6B is a diagram of a common information field in a trigger frame according to an embodiment of this application;
FIG. 7A is a diagram of a format of a trigger frame according to an embodiment of this application;
FIG. 7B is a diagram of another format of a trigger frame according to an embodiment of this application;
FIG. 8 is a diagram of a conventional format of a user information field in a trigger frame;
FIG. 9 is a diagram of a trigger frame in a new format according to an embodiment of this application;
FIG. 10 is a flowchart of another communication method according to an embodiment of this application;
FIG. 11A to FIG. 11E are diagrams of several execution procedures of a communication method according to an embodiment of this application;
FIG. 12 is a diagram of a format of a legacy preamble according to an embodiment of this application;
FIG. 13 is a diagram of several formats of a legacy preamble;
FIG. 14A to FIG. 14E are diagrams of several execution procedures of a communication method according to an embodiment of this application;
FIG. 15 is a flowchart of yet another communication method according to an embodiment of this application;
FIG. 16 is a diagram of an apparatus according to an embodiment of this application; and
FIG. 17 is a diagram of yet another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first type and a second type may be the same type or different types, and such designations do not indicate differences in devices, application scenarios, priorities, or importance corresponding to the two types. In addition, step numbers in embodiments described in this application are merely intended to distinguish between different steps, but are not intended to limit a sequence of the steps.

The following describes technical characteristics in embodiments of this application.

In the development of the Institute of Electrical and Electronics Engineers (institute of electrical and electronics engineers, IEEE) 802.11, one requirement for functionality is that later-defined operating modes need to maintain backward compatibility with IEEE 802.11a (backward compatibility). Therefore, starting from 802.11n, each generation of PPDUs includes a legacy preamble, which corresponds to the preamble defined in 802.11a, so as to ensure backward compatibility with 802.11a.

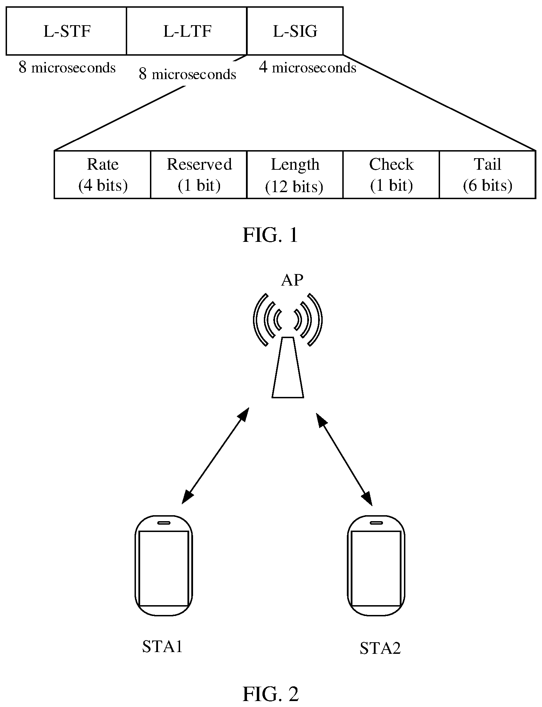

The legacy preamble mainly includes a legacy short training field (legacy short training field, L-STF), a legacy long training field (legacy long training field, L-LTF), and a legacy signal field (legacy signal field, L-SIG), as shown in FIG. 1. The L-STF has duration of 8 microseconds (µs), and includes 10 repeated parts. A receiving end of the legacy preamble may utilize the repetition characteristic for PPDU detection, automatic gain control setting, initial frequency offset estimation, initial time synchronization, and the like. The L-LTF has duration of 8 µs, and includes two repeated parts of 3.2 µs and one guard interval of 1.6 µs. The receiving end utilizes the L-LTF for further frequency and time correction and for channel estimation. The L-SIG has duration of 4 µs and carries information such as a rate and a length of the PPDU. For example, a length (length) field in the L-SIG may indicate duration of the PPDU, and a rate (rate) field in the L-SIG may indicate a rate of the PPDU. In addition, the L-SIG further includes fields such as parity (parity), tail (tail), and reserved (reserved), as shown in FIG. 1. For a STA that receives the legacy preamble, the STA keeps silent at least during the duration of the PPDU indicated by the L-SIG, for example, performs transmission only after expiration of the duration, so as to reduce interference.

At present, wireless local area network (wireless local area network, WLAN) applications based on the IEEE 802.11 technology have been deployed in many vertical markets, including conventional consumer electronics markets and the rapidly growing internet of things market. In order to reduce the deployment and operation and maintenance costs of a wireless fidelity (wireless fidelity, Wi-Fi) internet of things, the IEEE 802.11 working group is discussing an internet of things device supporting energy harvesting. The new project is named an ambient power (ambient power, AMP) project, and the internet of things device may also be referred to as an AMP device. Radio frequency (radio frequency, RF) wireless power transfer (wireless power transfer, WPT) is introduced into AMP devices, so that capacitors supporting RF WPT may be used to replace conventional batteries, thereby addressing a bottleneck issue brought by conventional batteries. For AMP devices, one or more of the following characteristics may be satisfied:
(1) There is a data communication mode at least on a sub (Sub)-1 GHz frequency band.
(2) There is a data communication mode at least on a 2.4 GHz frequency band, and a communication access category (access category, AC) is set to background (background, AC_BK).
(3) There is a WPT mode at least on a sub-1 GHz frequency band for indicating RF energy harvesting (energy harvesting).

Application scenarios of AMP include, but are not limited to, a smart home, smart agriculture, a smart factory, logistics/warehousing, retail delivery, indoor positioning, a data center, or the like.

AMP devices may be classified in some manners. In an embodiment of this application, for example, a classification manner is to classify AMP devices into three types: Type A, Type B, and Type C. Type A AMP devices have a relatively strong energy storage capability and support existing Wi-Fi protocols (for example, IEEE 802.11b/g/n). Type B AMP devices have a specific energy storage capability, do not support existing Wi-Fi protocols, and only support low-power transmission and reception operations. Type C AMP devices have no or only a limited energy storage capability, do not support existing Wi-Fi protocols, and only support low-power reception and backscatter operations. Because the Type B AMP device and the Type C AMP device only support low-power transmission and reception operations, these two types of AMP devices cannot support a relatively large bandwidth, but can support, for example, only a bandwidth of 4 MHz or even smaller. However, the legacy preamble described above has a bandwidth of 20 MHz. Therefore, the Type B AMP device or the Type C AMP device may fail to transmit the legacy preamble. In this case, relatively severe interference may be caused when the Type B AMP device or the Type C AMP device transmits a PPDU due to incapability of transmitting the legacy preamble.

In view of this, in embodiments of this application, an access point device may transmit first information and/or trigger a second station to transmit the first information. With the first information, a third station may be caused not to transmit data when a first station transmits uplink data, for example, the third station may keep silent during transmission of the uplink data by the first station. This is equivalent to that the access point device and/or the second station replaces the first station to transmit the first information, thereby reducing interference during transmission of data by the first station.

Embodiments of this application are applicable to local area networks (local area networks, LANs), particularly a WLAN, for example, a WLAN using any protocol in the IEEE 802.11 series protocols. The WLAN may include one or more basic service sets (basic service sets, BSSs). Network nodes in the basic service set include an access point (access point, AP) and a station (station, STA). Embodiments of this application are further applicable to WLAN systems supporting IEEE 802.11ax next-generation Wi-Fi (wireless fidelity, Wi-Fi) protocols, such as 802.11be, Wi-Fi 7 or extremely high throughput (extremely high throughput, EHT), as well as next-generation 802.11be, Wi-Fi 8, ultra high reliability (ultra high reliability, UHR, 802.11bn), Wi-Fi AI, and other 802.11 series systems. Embodiments of this application are further applicable to ultra wide band (ultra wide band, UWB)-based wireless personal area networks and sensing (sensing) systems.

Embodiments of this application are also applicable to a wireless local area network like an internet of things (internet of things, IoT) network or a vehicle-to-everything (vehicle to X, V2X) network. In addition, embodiments of this application may also be applicable to other communication systems, such as long term evolution (long term evolution, LTE), frequency division duplex (frequency division duplex, FDD) LTE, time division duplex (time division duplex, TDD) LTE, universal mobile telecommunications system (universal mobile telecommunications system, UMTS), worldwide interoperability for microwave access (worldwide interoperability for microwave access, WiMAX), fifth generation (fifth generation, 5G), or future evolved systems such as sixth generation (sixth generation, 6G) systems.

The following uses an example in which embodiments of this application are applicable to the WLAN. FIG. 2 shows a network architecture applicable to an embodiment of this application. FIG. 2 illustrates a WLAN including one AP and two STAs, where a STA is a mobile phone. A STA associated with the AP can receive a frame (for example, a trigger frame) sent by the AP, and can also send a frame (for example, uplink data) to the AP. Embodiments of this application are applicable to communication between AP and STA, or between AP and AP, where APs may communicate with each other through a distributed system (distributed system, DS), or between STA and STA without passing through an AP. In embodiments of this application, the number of APs participating in communication may be one or more, and the number of STAs participating in communication may be one or more.

In embodiments of this application, an access point device is used as an AP and a station is used as a STA. The station includes, for example, an AP STA and/or a non-AP STA (non-AP STA). For example, the first station described herein (hereinafter taking a first STA as an example) may include an AP STA and/or a non-AP STA; the second station described herein (hereinafter taking a second STA as an example) may include an AP STA and/or a non-AP STA, and so on.

The AP may be an access point for a terminal device to join a wired (or wireless) network. The AP is equivalent to a bridge that connects the wired network and the wireless network, and a main function is to connect various wireless network clients together and then connect the wireless network to the Ethernet. For example, an AP may be a terminal device with a mobile hotspot (Wi-Fi) chip (such as a mobile phone) or a network device (such as a router). In embodiments of this application, the AP may be a device supporting an 802.11be standard, or may be a device supporting multiple WLAN standards of 802.11 series, such as 802.11ax, 802.11ay, 802.11ac, 802.11n, 802.11g, 802.11b, 802.11a, 802.11be, 802.11bn, and future 802.11 series.

The STA may be a wireless communication chip, a wireless sensor, a wireless communication terminal, or the like, and may also be referred to as a user. For example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function, and the like. Optionally, the STA may support an 802.11be standard, or may support multiple WLAN standards of 802.11 series, such as 802.11ax, 802.11ay, 802.11ac, 802.11n, 802.11g, 802.11b, 802.11a, 802.11be, 802.11bn, and future 802.11 series standards.

Numbers of APs and STAs shown in FIG. 2 are merely examples, and may be smaller or larger.

To better describe embodiments of this application, the following describes, with reference to the accompanying drawings, the method provided in embodiments of this application. In method flowcharts corresponding to embodiments of this application, all steps indicated by dashed lines are optional steps. The method provided in each embodiment of this application may be applied to the network architecture shown in FIG. 2. For example, the AP involved in each embodiment of this application may be the AP in FIG. 2, the first STA involved in each embodiment of this application may be STA1 in FIG. 2, and the second STA involved in each embodiment of this application may be STA2 in FIG. 2.

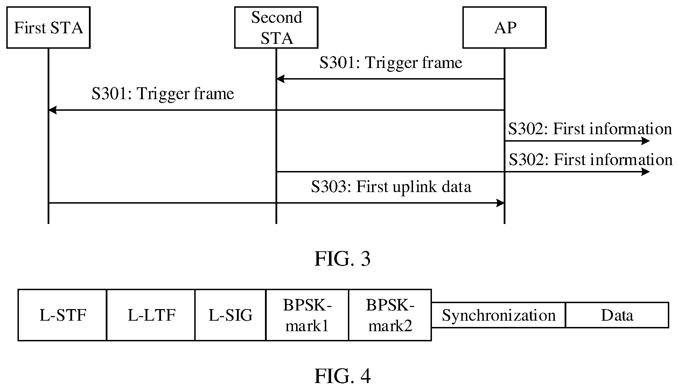

An embodiment of this application provides a communication method. FIG. 3 is a flowchart of the method.

S301: An AP transmits a trigger frame. Correspondingly, a first STA receives the trigger frame; correspondingly, a second STA may also receive the trigger frame. For example, if the trigger frame is transmitted in a broadcast manner, a plurality of STAs may receive the trigger frame. Embodiments of this application are described using the first STA and the second STA as examples.

The trigger frame may be used to trigger one or more STAs to transmit uplink data, and the one or more STAs include a first STA. For example, the trigger frame may be used to trigger one or more STAs of a first type to transmit uplink data, and the first STA is a STA of the first type. The first-type STA is a STA that is unable to transmit first information, or a STA supporting a bandwidth of less than 20 MHz. For example, the bandwidth supported by the first-type STA (for example, the maximum bandwidth supported by the first STA) is a first bandwidth, and the first bandwidth is relatively small, for example, smaller than 20 MHz; whereas a transmission bandwidth of the first information is a second bandwidth, and the second bandwidth is relatively large, for example, 20 MHz, or may be larger than 20 MHz. It can be seen that the first-type STA does not support the second bandwidth, and thus the first-type STA cannot transmit the first information. For example, the first-type STA includes a Type B AMP device and/or a Type C AMP device.

For example, the trigger frame may be included in a first PPDU, the first PPDU is, for example, referred to as a downlink (downlink, DL) AMP PPDU, and a format of the first PPDU is, for example, shown in FIG. 4. It can be seen that the first PPDU may include a legacy preamble, a synchronization (Sync) field, a data (data) field, and the like. Optionally, the format of the first PPDU is a format defined in IEEE 802.11ba, which is also a PPDU format used by wake up radio (wake up radio, WUR). The legacy preamble may include an L-STF, an L-LTF, and an L-SIG, and may further include two fields, namely binary phase shift keying (binary phase shift keying, BPSK)-mark (mark) 1 and BPSK-mark2. Optionally, the trigger frame is included in the data field of the first PPDU. The legacy preamble included in the first PPDU may be transmitted in a second bandwidth, whereas the synchronization field and the data field included in the first PPDU may be transmitted in a first bandwidth, and the first bandwidth may be smaller than the second bandwidth. Alternatively, the first PPDU may also use other formats. For example, the legacy preamble of the first PPDU may include an L-STF, an L-LTF, and an L-SIG as shown in FIG. 1, and does not include BPSK-mark1 and BPSK-mark2.

The first bandwidth may be, for example, a bandwidth supported by the first-type STA, such as 4 MHz, or may be greater than or less than 4 MHz. The second bandwidth may be a bandwidth not supported by the first-type STA, but the second bandwidth is a bandwidth supported by both the AP and the second-type STA. The second bandwidth is larger than the first bandwidth, and is, for example, 20 MHz, or may be larger than or smaller than 20 MHz.

Optionally, the trigger frame may further be used to trigger one or more second-type STAs to transmit the first information and/or an excitation signal, and/or the AP may transmit the first information and/or the excitation signal. For example, the second STA is one of the second-type STAs triggered by the trigger frame. The second-type STA is, for example, a STA configured to transmit the first information and/or configured to transmit an excitation signal to a STA that is unable to transmit the first information (for example, the first-type STA). For example, the second-type STA supports a relatively large bandwidth, for example, greater than or equal to 20 MHz, and can be adapted to the bandwidth of the first information (for example, the bandwidth of the first information may be greater than or equal to 20 MHz). Therefore, the second-type STA can transmit the first information. For another example, the second-type STA has an energy storage capability and is capable of transmitting a radio frequency signal (for example, an excitation signal). Therefore, the second-type STA can transmit an excitation signal to the first-type STA. For example, the second-type STA may include a class A AMP STA, and may further include a non-AMP STA, and the like.

It can be seen that, in embodiments of this application, the AP may transmit the first information and/or may trigger the second-type STA to transmit the first information, and the first STA that is unable to transmit the first information does not need to transmit the first information, but only needs to transmit uplink data. The first information may enable a third STA not to transmit data when the first STA transmits uplink data. For example, the third STA may keep silent when the first STA transmits uplink data. The third STA includes, for example, at least one STA other than the first STA. The at least one STA includes, for example, the second STA, or may not include the second STA. It can be understood that, by using the first information, one or more STAs other than the first STA may keep silent when the first STA transmits uplink data, thereby reducing interference to the uplink data. This is equivalent to that the AP and/or the second-type STA replaces the first STA to transmit the first information, thereby reducing interference when the first STA transmits data.

In addition, the excitation signal may be used to enable a STA receiving the excitation signal to modulate information to be transmitted by the STA (for example, uplink data) onto the excitation signal (for example, by using a load modulation manner) and transmit the information. The excitation signal may be a continuous wave (for example, a sine (sine) wave), or may be a Wi-Fi signal, a Bluetooth (Bluetooth) signal, a long range radio (long range radio, LoRa) signal, or the like. For example, if the first STA does not have an energy storage capability or has a limited energy storage capability, for example, the first STA is a Type C AMP device, the first STA cannot transmit uplink data by using energy provided by the first STA. In this case, the AP and/or the second-type STA may further transmit an excitation signal to the first STA, so that the first STA can transmit uplink data by using energy of the excitation signal, thereby improving a success rate of transmitting uplink data by the first STA.

Optionally, the first information may include a legacy preamble, or may include a short frame. Optionally, the short frame may include a legacy preamble, and may further include a frame body (frame body). For example, it is understood that the legacy preamble is a part of the short frame. This is equivalent to that the AP and/or the second-type STA in embodiments of this application may transmit only the legacy preamble, or may transmit complete information (a short frame) including the legacy preamble. Optionally, the short frame includes, for example, clear to send (clear to send, CTS), a null data packet (null data packet, NDP), or an acknowledgment (ACK), or may include other short frames, which is not limited herein. The format or content of the legacy preamble will be described in detail in other embodiments hereinafter.

S302: The AP transmits the first information, and/or the second STA transmits the first information. Alternatively, S302 may be understood as that the AP transmits the first information and/or the trigger frame further triggers the second STA to transmit the first information. Therefore, the AP transmits the first information and/or the second STA transmits the first information.

As described above, the trigger frame in S301 may trigger one or more second-type STAs to transmit the first information. The second STA is one of the one or more second-type STAs. FIG. 3 is described by taking the second STA transmitting the first information as an example. For example, if the second STA is triggered by the trigger frame, the second STA may transmit the first information.

S303: The first STA transmits first uplink data. Correspondingly, the AP receives the first uplink data.

The first STA is triggered by the trigger frame in S301, and may transmit the first uplink data. Because the AP and/or the second-type STA replaces the first STA to transmit the first information, the first STA incapable of transmitting the first information does not necessarily transmit the first information, but transmits the first uplink data. This is equivalent to that the AP and/or the second-type STA replaces the first STA to transmit the first information, thereby reducing interference when the first STA transmits uplink data, so that a STA incapable of transmitting the first information can also transmit uplink data.

The trigger frame described in the embodiment shown in FIG. 3 may have different implementations, which are described below by way of example.
1. First implementation of the trigger frame. In this implementation, a conventional format of a trigger frame may be used as a format of the trigger frame in embodiments of this application.

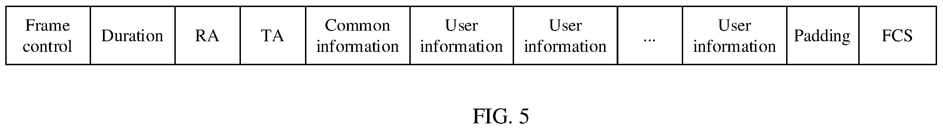

The trigger frame may include a common information (common information) field and at least one user information (user information) field. For example, a format of the trigger frame is shown in FIG. 5. It can be seen from FIG. 5 that, the trigger frame may include a frame control (frame control) field, a duration (duration) field, a receiving address (RA) field, a transmitting address (TA) field, a common information field, at least one user information field, a padding (padding) field, and a frame check sequence (frame check sequence, FCS) field.

The common information field may include a trigger type (trigger type) field, and the trigger type field occupies 4 bits (bit). The 4 bits have 16 values, or 16 states in total, among which states 0 to 8 are defined, and states 9 to 15 are reserved. The trigger frame in embodiments of this application is used to trigger an AMP device to transmit uplink data. Therefore, a value of the trigger type field is set to a first value (or a state of the trigger type field is set to a first state), and the first value indicates that the trigger frame is used to trigger a first-type STA to transmit uplink data. Optionally, the value range of the first value is, for example, [9, 15], which is equivalent to that in embodiments of this application, reserved values of the trigger type field may be used as the first value, without expanding the number of bits occupied by the trigger type field, thereby achieving better compatibility with existing technologies.

Table 1 may be referred to as an example of a correspondence between values of the trigger type field and indicated content. In Table 1, X represents the first value in embodiments of this application, and AMP uplink (uplink, UL) corresponding to X indicates that an AMP device transmits uplink data. The AMP device is, for example, an AMP device incapable of transmitting a legacy preamble, or an AMP device without a capability of transmitting a legacy preamble. Table 1 illustrates an example in which the first-type STA includes AMP devices.

**Table 1**

| Value of a trigger type field | Indication content |
|---|---|
| 0 | Basic (basic) |
| 1 | Beamforming report poll (beamforming report poll, BFRP) |
| 2 | Multi-user block ack request (multi-user block ack request, MU-BAR) |
| 3 | Multi-user request to send (multi-user request to send, MU-RTS) |
| 4 | Buffer status report poll (buffer status report poll, BSRP) |
| 5 | Groupcast retries (groupcast retries, GCR) |
| 6 | Bandwidth query report poll (bandwidth query report poll, BQRP) |
| 7 | Null data packet (null data packet, NDP) feedback report poll (NDP feedback report poll, NFRP) |
| 8 | Ranging (ranging) |
| X | AMP UL |
| Another value | Reserved |

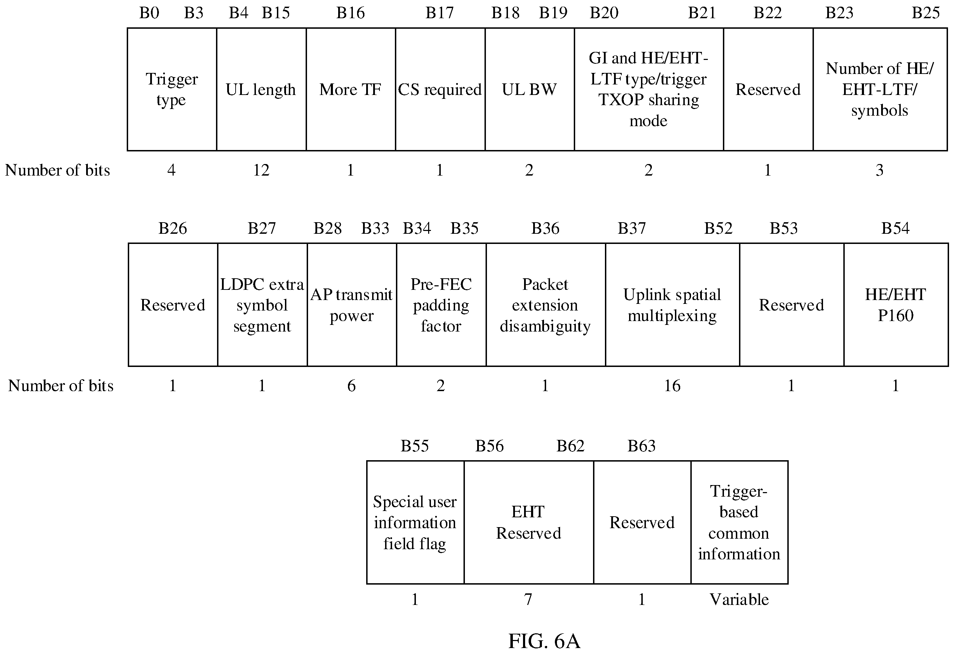

Optionally, X can be any one of values 9-15. For example, X can be 9. In this case, the other values among 9-15, except for X, are used as reserved values
Referring to FIG. 6A, a diagram of the conventional format of the common information field in the trigger frame is illustrated. The common information field includes a trigger type field, an uplink length (UL length) field, a more TF (more TF) field, a carrier sensing required (CS required) field, an uplink bandwidth (UL bandwidth, UL BW) field, a guard interval (guard interval, GI) and high efficiency (high efficiency, HE)/EHT-LTF type/triggered transmission opportunity (transmission opportunity, TXOP) sharing mode field, a reserved field, a number of HE/EHT-LTF symbols (number of HE/EHT-LTF symbols) field, a low-density parity-check (LDPC) extra symbol segment (LDPC extra symbol segment) field, an AP transmit power (AP TX power) field, a pre-forward error correction (pre-FEC) padding factor (pre-FEC padding factor) field, a packet extension (PE) disambiguity (PE disambiguity) field, an uplink spatial reuse (UL spatial reuse) field, an HE/EHT P160 field, a special user information field flag (special user information field flag), an EHT reserved field, and a trigger dependent common information (trigger dependent common information) field. In FIG. 6A, B0 to B63 indicate bits occupied by respective fields, and "bit number" in FIG. 6A indicates a number of bits occupied by each field.

Optionally, in embodiments of this application, at least six fields among the remaining fields in the common information field, except for the trigger type field and the uplink length field, may be reserved fields. In the common information field shown in FIG. 6A, five reserved fields are included (including an EHT reserved field). In embodiments of this application, except for the trigger type field and the uplink length field, other fields in the common information field may not be used. Therefore, at least six fields in the common information field other than the trigger type field and the uplink length field may be configured as reserved fields, so that valid values do not need to be set for these at least six fields, thereby simplifying implementation of an AP and a STA. Optionally, the at least six fields may include part or all of the five reserved fields originally included in the common information field, or may not include the five reserved fields, which is not limited herein. As an example, except for the trigger type field, the uplink length field, and the AP transmit power field, the remaining fields in the common information field may all be reserved fields, thereby significantly simplifying implementation of the AP and the STA while retaining valid fields as much as possible. As another example, except for the trigger type field and the uplink length field, all remaining fields in the common information field may be reserved fields, thereby significantly simplifying implementation of the AP and the STA. In addition, optionally, the trigger dependent common information field included in the common information field is variable, that is, the common information field may include the trigger dependent common information field, or may not include the trigger dependent common information field. Therefore, the common information field in embodiments of this application may include the trigger dependent common information field, or may not include the trigger dependent common information field.

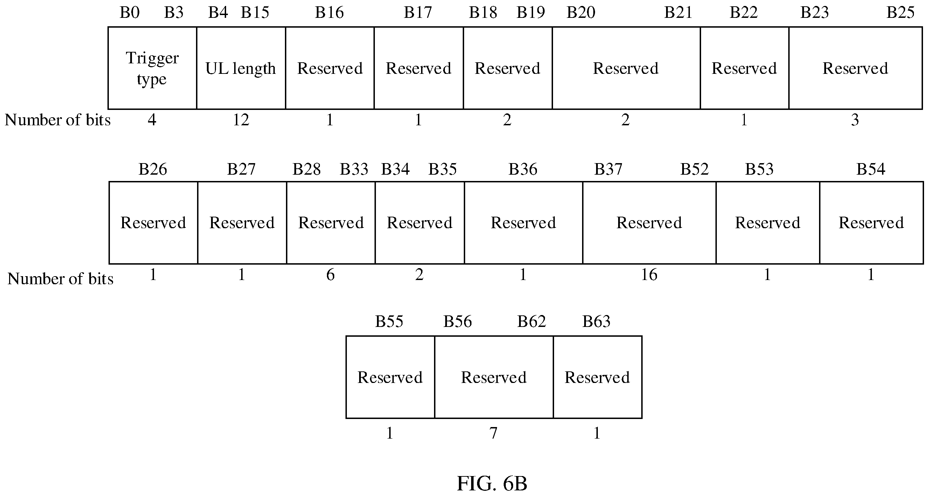

For example, in embodiments of this application, the common information field does not include the trigger dependent common information field, and all remaining fields in the common information field other than the trigger type field and the uplink length field are reserved fields. For details, refer to FIG. 6B. Accordingly, implementation of the AP and the STA can be simplified, and transmission overhead can also be reduced.

In addition to the common information field, the trigger frame may further include at least one user information field. Reference may be made to FIG. 5. Each user information field in the at least one user information field may include a user identification field, and the user identification field may indicate one STA, representing that the trigger frame triggers the STA.

After transmitting the trigger frame, the AP and/or a second-type STA will transmit first information and/or an excitation signal, which will be described later. For example, if the AP transmits the first information and the excitation signal without the second-type STA transmitting the first information and the excitation signal, or if the AP transmits the first information without the second-type STA transmitting the first information (and the excitation signal is not necessarily transmitted), optionally, the trigger frame may not be configured to trigger the second-type STA, and may only be configured to trigger the first STA; or the trigger frame may not be configured to trigger the second-type STA, and may only be configured to trigger the first-type STA. Therefore, if the AP transmits the first information and the excitation signal without the second-type STA transmitting the first information and the excitation signal, or if the AP transmits the first information without the second-type STA transmitting the first information (and the excitation signal is not necessarily transmitted), the at least one user information field may not indicate the second-type STA, thereby achieving that the second-type STA is not triggered. The second STA belongs to the second-type STA. If the trigger frame triggers the second-type STA to transmit the first information and/or the excitation signal, the second STA may be one of the second-type STAs triggered by the trigger frame. The second-type STA includes a STA capable of transmitting the first information and/or an excitation signal. For example, in embodiments of this application, the second-type STA may also be referred to as a legacy preamble transmitting (legacy preamble transmitting, LPT) STA, or may have other alternative names. For example, the second-type STA may support a second bandwidth, whereas the first-type STA supports a first bandwidth and does not support the second bandwidth, where the first bandwidth is smaller than the second bandwidth. For example, the second bandwidth is 20 MHz, and the first bandwidth is 4 MHz or less than 4 MHz.

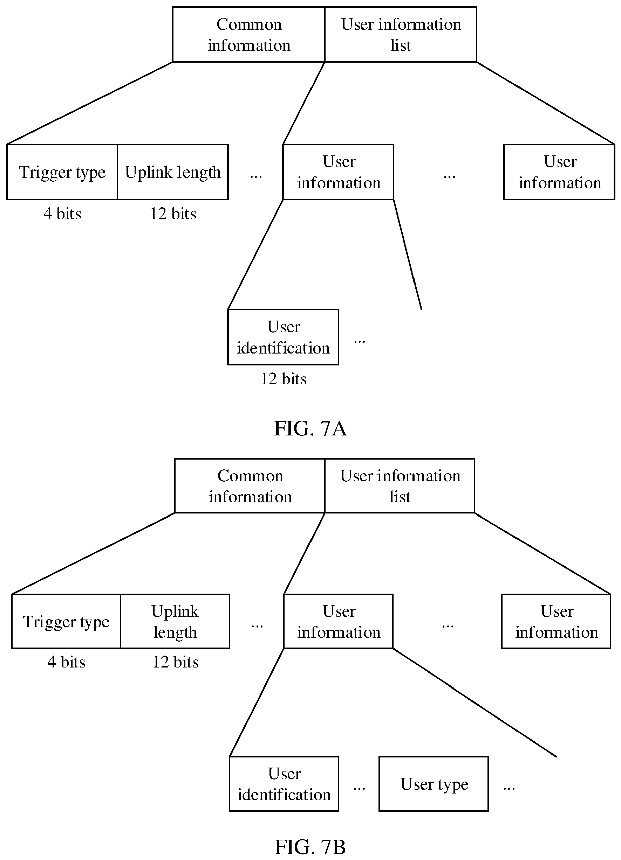

However, even if the at least one user information field does not trigger the second-type STA, the at least one user information field still triggers the first-type STA (the first STA is a first-type STA triggered by the at least one user information field) to transmit uplink data. For example, one user information field among the at least one user information field is used to trigger the first STA, and the user information field may include a user identification field, where the user identification field may indicate the first STA (for example, including an identifier of the first STA). In this case, it may be considered that the trigger frame indicates the first STA to transmit uplink data. Referring to FIG. 7A, a diagram of a trigger frame in an embodiment of this application is provided. The trigger frame includes a common information field and at least one user information field (FIG. 7A illustrates an example in which the at least one user information field is included in a user information list). The common information field includes a trigger type field (for example, occupying 4 bits) and an uplink length field (for example, occupying 12 bits), and it is not limited whether the common information field further includes other fields. One user information field of the at least one user information field includes a user identification field. For example, one user information field of the at least one user information field is used to trigger the first STA. The user information field may include a user identification field, and may further include a user type (user type) field. The user identification field may indicate the first STA, for example, including an identifier of the first STA; the user type field may indicate to transmit uplink data. In this case, the user information field is equivalent to indicating that the first STA transmits uplink data. FIG. 7A illustrates an example in which the user information field does not include a user type field.

Refer to FIG. 7B again, which is another diagram of a trigger frame according to an embodiment of this application. The trigger frame includes a common information field and at least one user information field. The common information field includes a trigger type field (for example, occupying 4 bits) and an uplink length field (for example, occupying 12 bits). One user information field of the at least one user information field includes a user identification field and a user type field. If the trigger frame is further used to trigger another STA (for example, another first-type STA) to transmit uplink data, another user information field of the at least one user information field may further indicate the another STA, and the indication manner is similar to that for indicating the first STA. The number of bits occupied by the corresponding fields in FIG. 7A and FIG. 7B is merely an example.

Alternatively, if the second STA transmits the first information and/or the excitation signal (or a second-type STA transmits the first information and/or the excitation signal), or if both the AP and the second STA (or the second-type STA) transmit the first information and/or the excitation signal, the trigger frame may, in addition to triggering the first-type STA to transmit uplink data, further trigger one or more second-type STAs to transmit the first information, where the one or more second-type STAs may include the second STA. For example, a user information field among the at least one user information field is used to trigger the second STA, and the user information field may include a user identification field and may further include a user type field, an example of which is illustrated in FIG. 7B. The user identification field may indicate the second STA, for example, including an identifier of the second STA; the user type field may indicate to transmit the first information and/or the excitation signal. In this case, the user information field is considered to indicate that the second STA transmits the first information and/or the excitation signal. In this case, among the at least one user information field, some user information fields may be used to trigger first-type STAs, and other user information fields may be used to trigger second-type STAs, where the implementation of the user information field used to trigger the first-type STAs may refer to the foregoing description.

As described above, the user type field occupies, for example, 2 bits, or may occupy more or fewer bits, which is not limited herein. Different values (or different states) of the user type field may indicate different behaviors of the STA. For example, referring to Table 2, an example implementation of the user type field is provided.

**Table 2**

| User type | Description (description) |
|---|---|
| 0 | AMP STA |
| 1 | LPT STA transmitting legacy preamble (LPT STA transmitting legacy preamble) |
| 2 | LPT STA transmitting excitation signal (LPT STA transmitting RF signals) |
| 3 | Reserved |

The first column of Table 2 indicates values of the user type field. According to Table 2, if the value of the user type field is "0", it indicates that the STA indicated by the user information field in which the user type field is located is an AMP STA, and the behavior of the AMP STA is to transmit uplink data. Alternatively, if the value of the user type field is "1", it indicates that the STA indicated by the user information field in which the user type field is located is an LPT STA, and the behavior of the LPT STA is to transmit a legacy preamble, and so on. For the same LPT STA (for example, the second STA), the AP may trigger the second STA to transmit both a legacy preamble and an excitation signal. In this case, if the user type field occupies 2 bits, two user information fields of the at least one user information field may be used to indicate the second STA. For example, the user identification fields in these two user information fields both include an identifier of the second STA, where the user type field in one of the two user information fields has a value of "1", and the user type field in the other user information field has a value of "2".

For example, referring to Table 3, another example implementation of the user type field is provided. In this example, the user type field occupies 3 bits.

**Table 3**

| User type | Description (description) |
|---|---|
| 0 | AMP STA |
| 1 | LPT STA transmitting legacy preamble (LPT STA transmitting legacy preamble) |
| 2 | LPT STA transmitting excitation signal (LPT STA transmitting RF signals) |
| 3 | LPT STA transmitting legacy preamble and excitation signal (LPT STA transmitting legacy preamble and RF signals) |
| 4 | Reserved |
| 5 | Reserved |
| 6 | Reserved |
| 7 | Reserved |

The first column of Table 3 indicates values of the user type field. According to Table 3, if the value of the user type field is "0", it indicates that the STA indicated by the user information field in which the user type field is located is an AMP STA, and the behavior of the AMP STA is to transmit uplink data; or if the value of the user type field is "1", it indicates that the STA indicated by the user information field in which the user type field is located is an LPT STA, and the LPT STA is configured to transmit a legacy preamble; or if the value of the user type field is "3", it indicates that the STA indicated by the user information field in which the user type field is located is an LPT STA, and the LPT STA is configured to transmit a legacy preamble and an excitation signal, and so on. For the same LPT STA (for example, the second STA), the AP may trigger the second STA to transmit both a legacy preamble and an excitation signal. In this case, if the user information field occupies 3 bits, one user information field among the at least one user information field may be used to indicate the second STA. For example, the user identification field in the user information field includes an identifier of the second STA, and the value of the user type field included in the user information field is "3". Compared with Table 2, the indication of STA behavior in Table 3 is simpler; whereas compared with Table 3, the user type field in Table 2 occupies fewer bits, which helps reduce transmission overhead. Alternatively, in addition to the foregoing description, the user type field may have other implementations, which is not limited herein.

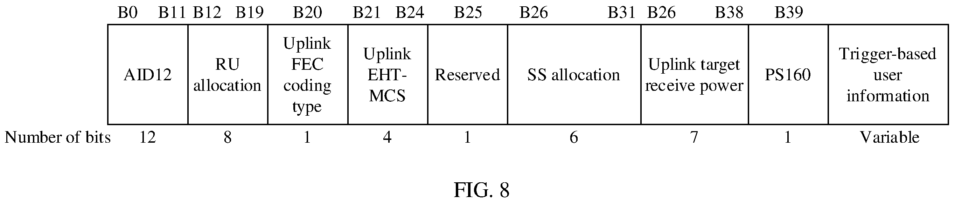

Refer to FIG. 8, which is a diagram of a conventional format of a user information field in a trigger frame. The user information field may include an association identification (association identification, AID) 12 field, an RU allocation (RU allocation) field, an uplink forward error correction coding type (UL FEC coding type) field, an uplink EHT modulation and coding scheme (UL EHT-MCS) field, a reserved field, a spatial stream allocation (SS allocation) field, an uplink target receive power (UL target receive power) field, a PS160 field, and a trigger dependent user information (trigger dependent user information) field. The user type field mentioned above may be a newly defined field in the user information field. For example, the user type field may be implemented using existing bits in the user information field, or may be introduced as additional bits newly added in the user information field.

The format of the user information field in embodiments of this application may be obtained by updating a format of a conventional user information field. Optionally, in the user information field in embodiments of this application, at least two fields among the remaining fields other than the user identification field may be reserved fields. Alternatively, it may be understood that the user information field in embodiments of this application is obtained by setting at least two fields among the remaining fields other than the user identification field in a conventional user information field as reserved fields. In the user information field shown in FIG. 8, one reserved field is included. For embodiments of this application, except for the user identification field, other fields in the user information field may not be utilized. Therefore, at least two fields other than the user identification field in the user information field may be set as reserved fields, so that valid values do not need to be configured for these at least two fields, thereby simplifying implementation of the AP and the STA. Optionally, the at least two fields may include a reserved field originally included in the common information field, or may not include the reserved field, which is not limited herein.

As described above, the user information field may include a user type field, or may not include a user type field (for example, if the AP transmits the first information and the excitation signal, and the second-type STA does not transmit the first information or the excitation signal, or if the AP transmits the first information and the second-type STA does not transmit the first information (and the excitation signal is not necessarily transmitted), then the user information field is used to trigger first-type STAs, and the user information field may include or may not include the user type field). If the user information field includes a user type field, the user type field may occupy one or more bits of the at least two fields, that is, one or more bits of reserved fields may be used as the user type field, so that it is not necessary to add additional bits in the user information field as the user type field, thereby avoiding an increase in overhead of the user information field.

As described above, the excitation signal may be transmitted, or may not be transmitted. For example, for a STA having an energy storage capability, uplink data may be transmitted using energy provided by the STA itself without relying on a backscatter-based method. If the trigger frame is used to trigger such a STA to transmit uplink data, neither the AP nor the second-type STA needs to transmit the excitation signal. Such STAs include, for example, Type B AMP STAs, and may further include other STAs. For another example, for a STA having no energy storage capability or only a limited energy storage capability, uplink data cannot be transmitted using energy provided by the STA itself, and uplink data needs to be transmitted by using backscatter. In this case, if the trigger frame is used to trigger such a STA to transmit uplink data, the AP and/or the second-type STAs may transmit an excitation signal. Such STAs include, for example, Type C AMP STAs, and may further include other STAs.

Backscatter may also be referred to as backscattering. Backscatter communication is a wireless technology that enables signal transmission and encoding without requiring an active transmitter. In the backscatter communication technology, a signal transmitting end does not need to actively generate a radio frequency signal, but communicates by reflecting electromagnetic waves from other devices. Similar to radar principles, when electromagnetic waves reach the surface of an object, a portion of the electromagnetic waves is reflected by the object, and the strength of the reflected signal depends on the shape and material of the object, the distance between the object and the electromagnetic wave transmitting end, or the like. For example, in the backscatter communication technology, a signal transmitting end (for example, the first STA in embodiments of this application) may modulate a radio frequency signal from other devices (for example, an excitation signal from the AP and/or a second-type STA) to transmit data, without requiring the signal transmitting end to independently generate a radio frequency signal.

2. Second implementation of the trigger frame. In this implementation, a new format may be defined for the trigger frame in embodiments of this application.

For example, the trigger frame may include at least one first user information field, and each first user information field among the at least one first user information field may indicate one first-type STA. Taking the case where the first-type STAs are AMP STAs (for example, including Type B AMP STAs and/or Type C AMP STAs) as an example, the first user information field may also be referred to as an AMP user information (AMP user information) field, or may have other names. For example, one first user information field of the at least one first user information field may indicate (or trigger) the first STA, and the trigger frame may further indicate the first STA to transmit uplink data. For example, the first user information field is used to trigger the first STA, and the first user information field may include a user identification field, and the user identification field may indicate the first STA (for example, including an identifier of the first STA). In this case, it may be considered that the trigger frame indicates the first STA to transmit uplink data.

Optionally, the trigger frame may further include at least one second user information field, and each second user information field in the at least one second user information field may indicate one second-type STA. Taking the second-type STA as an LPT STA as an example, the second user information field may also be referred to as an LPT user information (LPT user information) field, or may have other names. For example, one second user information field of the at least one second user information field may indicate (or trigger) the second STA. For example, the second user information field is used to trigger the second STA, and the second user information field may include a user identification field, and the user identification field may indicate the second STA (for example, including an identifier of the second STA). In addition, the second user information field may further include a user type field (or a type field, or may also have other names). The user type field may indicate that the second STA transmits first information and/or an excitation signal. This is equivalent to that the second user information field may indicate (or trigger) the second STA to transmit the first information and/or the excitation signal. The user type field may occupy one or more bits. Refer to Table 4 for an example of the user type field, in which the user type field occupies one bit as an example.

**Table 4**

| User type field | Description |
|---|---|
| 0 | LPT STA transmitting legacy preamble |
| 1 | LPT STA transmitting RF signals |

The first column of Table 4 indicates values of the user type field. Table 4 illustrates the second-type STA as an LPT STA as an example. According to Table 4, if the value of the user type field is "0", it indicates that the LPT STA indicated by the user information field transmits a legacy preamble; or if the value of the user type field is "1", it indicates that the STA indicated by the user information field transmits an excitation signal. For the same LPT STA (for example, the second STA), the AP may trigger the second STA to transmit both a legacy preamble and an excitation signal. In this case, if the user type field occupies 2 bits, two second user information fields among the at least one second user information field may be used to indicate the second STA. For example, the user identification fields in these two second user information fields both include an identifier of the second STA, where the user type field in one of the two second user information fields has a value of "0", and the user type field in the other user information field has a value of "1".

For example, referring to Table 5, another example implementation of the user type field is provided. In this example, the user type field occupies 2 bits.

**Table 5**

| User type field | Description |
|---|---|
| 0 | LPT STA transmitting legacy preamble |
| 1 | LPT STA transmitting RF signals |
| 2 | LPT STA transmitting legacy preamble and RF signals |
| 3 | Reserved |

The first column of Table 5 indicates values of the user type field. According to Table 5, if the value of the user type field is "0", it indicates that the LPT STA indicated by the user information field transmits a legacy preamble; or if the value of the user type field is "1", it indicates that the LPT STA indicated by the user information field transmits an excitation signal; or if the value of the user type field is "2", it indicates that the LPT STA indicated by the user information field transmits both a legacy preamble and an excitation signal, and so on. For the same LPT STA (for example, the second STA), the AP may trigger the second STA to transmit both a legacy preamble and an excitation signal. In this case, if the user information field occupies 2 bits, one second user information field among the at least one second user information field may be used to indicate the second STA. For example, the second user identification field in the user information field includes an identifier of the second STA, and the value of the second user type field included in the user information field is "2". Compared with Table 4, the indication of LPT STA behavior in Table 5 is simpler; whereas compared with Table 5, the user type field in Table 4 occupies fewer bits, which helps reduce transmission overhead. Alternatively, in addition to the foregoing description, the user type field may have other implementations, which is not limited herein.

Alternatively, the trigger frame may not include the second user information field. For example, if the AP transmits the first information and the excitation signal without the second-type STA transmitting the first information and the excitation signal, or if the AP transmits the first information without the second-type STA transmitting the first information (and the excitation signal does not need to be transmitted), then the trigger frame may not need to trigger the second-type STA. Therefore, the trigger frame may not include the second user information field. Alternatively, even if the trigger frame does not trigger the second-type STA, and the format of the trigger frame is fixed, the trigger frame may still include at least one second user information field. In this case, a value of the at least one second user information field may be invalid. For example, the value of the at least one second user information field may be a default (default) value.

Optionally, the trigger frame may further include a common information field, and the common information field includes, for example, an uplink length field. In addition, the common information field may not include other fields. Alternatively, in addition to including the uplink length field, the common information field may further include one or more fields in a conventional common information field, which is not limited herein.

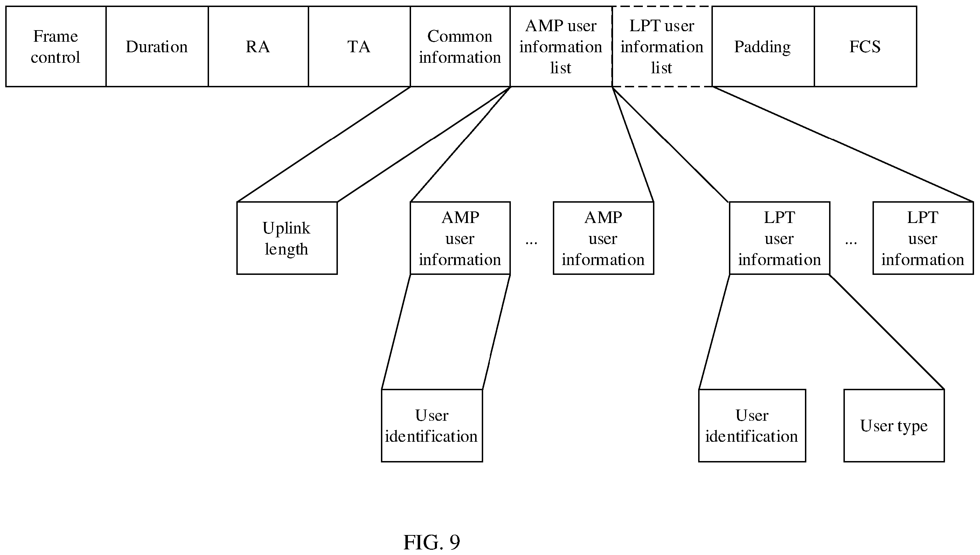

Refer to FIG. 9, which is a diagram of a trigger frame in a new format according to an embodiment of this application. The trigger frame includes, for example, a frame control field, a duration field, an RA field, a TA field, a common information field, at least one first user information field, at least one second user information field, a padding field, and an FCS field. In FIG. 9, the at least one first user information field is included in a first list, the at least one second user information field is included in a second list, and the first list is located before the second list. The first list is referred to as an AMP user information list (AMP user information list), and the second list is referred to as an LPT user information list (LPT user information list). In FIG. 9, the common information field includes an uplink length field; the first user information field includes a user identification field (this user identification field may also be referred to as an AMP STA ID, or may have other names); and the second user information field includes a user identification field (for example, an AID12 field) and a user type field (the user type field is, for example, referred to as an LPT STA type, or may have other names).

For a receiving end of the trigger frame (for example, including a first STA or a first-type STA; or including a first-type STA and a second-type STA), whether the receiving end is triggered or the behavior of the receiving end may be determined by parsing the trigger frame. For example, the receiving end may parse the fields in the trigger frame sequentially from front to back. Taking FIG. 9 as an example, when the first list is located before the second list, both a first-type STA (for example, the first STA) and a second-type STA (for example, the second STA) may parse the first user information fields in the first list first, in a front-to-back order. For the first STA, if the identifier of the first STA is detected in a first user information field in the first list, the parsing process of the first list and the second list by the first STA may be stopped. That is, the first STA does not need to further parse the remaining first user information fields in the first list, nor parse the second list.

For the second STA, each first user information field in the first list may be parsed sequentially to determine whether an identifier of the second STA is included therein. If the first user information fields in the first list do not include the identifier of the second STA, the second STA may continue to parse the second user information fields in the second list after all the first user information fields in the first list have been parsed. For example, if the identifier of the second STA is detected in a second user information field in the second list, the second STA may stop parsing the remaining second user information fields in the second list (for example, when the user type field adopts the implementation shown in Table 5); alternatively, the second STA may continue to parse the remaining second user information fields in the second list to determine whether the identifier of the second STA is included therein, until all the second user information fields in the second list have been parsed (for example, when the user type field adopts the implementation shown in Table 4).

Alternatively, for the second STA, the first user information fields in the first list may be parsed. For a specific first user information field in the first list (for example, a 1st first user information field the first list from front to back), if the second STA determines that the first user information field does not include a user type field, the second STA may determine that the first list is not a list corresponding to a second-type STA. In this case, the second STA may stop parsing remaining user information fields in the first list and instead start parsing second user information fields in a next list (namely, the second list). For example, if the second STA detects an identifier of the second STA in a specific second user information field in the second list, the second STA may stop parsing remaining second user information fields in the second list; alternatively, the second STA may continue parsing remaining second user information fields in the second list to determine whether an identifier of the second STA is included therein, until all second user information fields in the second list have been parsed.

The foregoing description is provided by taking FIG. 9 as an example, in which the first list is located before the second list. However, in embodiments of this application, the positions of the first list and the second list are not limited. For example, the second list may be located before the first list. For a receiving end, fields in the trigger frame may still be parsed sequentially from front to back. For example, when the second list is located before the first list, both the first STA and the second STA may parse the second user information fields in the second list first, in a front-to-back order. For the second STA, if an identifier of the second STA is detected in a second user information field in the second list, the second STA may stop parsing remaining second user information fields in the second list; alternatively, the second STA may continue parsing remaining second user information fields in the second list to determine whether an identifier of the second STA is included therein, until all second user information fields in the second list have been parsed. Because the identifier of the second STA has already been detected in the second list, the second STA does not need to further parse the first list.

For the first STA, each second user information field in the second list may be parsed sequentially to determine whether an identifier of the first STA is included therein. If the second user information fields in the second list do not include the identifier of the first STA, the first STA may continue to parse the first user information fields in the first list after all second user information fields in the second list have been parsed. For example, if an identifier of the first STA is detected in a first user information field in the first list, the first STA may stop parsing remaining first user information fields in the first list.

Alternatively, for the first STA, the second user information fields in the second list may be parsed. For a second user information field in the second list, for example, a second user information field located at a front position of the second list, if the first STA determines that the second user information field includes a user type field, the first STA may determine that the second list is not a list corresponding to a first-type STA. Accordingly, the first STA may stop parsing remaining second user information fields in the second list and instead start parsing first user information fields in a next list, that is, the first list. For example, if an identifier of the first STA is detected in a first user information field in the first list, the first STA may stop parsing remaining first user information fields in the first list.

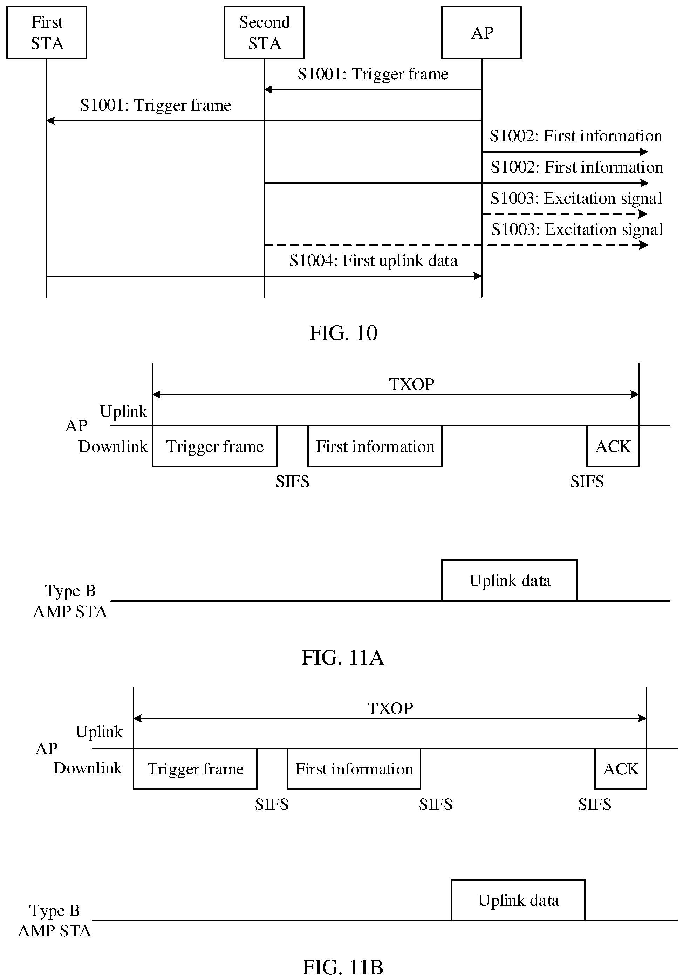

Next, another communication method provided in embodiments of this application is described. The method may be regarded as a specific example of the embodiment shown in FIG. 3. FIG. 10 is a flowchart of the method.

S1001: An AP transmits a trigger frame. Correspondingly, a first STA receives the trigger frame; correspondingly, a second STA may also receive the trigger frame.

The trigger frame may be used to trigger one or more first-type STAs to transmit uplink data, and the one or more first-type STAs include the first STA. Optionally, the trigger frame may further be used to trigger one or more second-type STAs to transmit the first information and/or an excitation signal, and/or the AP may transmit the first information and/or the excitation signal. For example, the second STA is one STA among the one or more second-type STAs.

S1001 may be the same as S301 in the embodiment shown in FIG. 3. Therefore, for more description of S1001, reference may be made to S301 in the embodiment shown in FIG. 3.

S1002: The AP transmits the first information, and/or the second STA transmits the first information. Alternatively, S1002 may also be understood as that the AP transmits the first information and/or the trigger frame further triggers the second STA to transmit the first information. Therefore, the AP transmits the first information and/or the second STA transmits the first information.

S1002 may be the same as S302 in the embodiment shown in FIG. 3.

If the first information is transmitted by the AP, optionally, the AP may transmit the first information when a short interframe space (short interframe space, SIFS) elapses after completion of transmission of the trigger frame in S1001. The SIFS is, for example, 16 µs. For details, refer to FIG. 11A or FIG. 11B. Both FIG. 11A and FIG. 11B use an example in which the excitation signal is not necessarily transmitted, and the trigger frame triggers a Type B AMP STA to transmit uplink data. In FIG. 11A and FIG. 11B, after receiving the trigger frame, the Type B AMP STA transmits uplink data after expiration of first duration. A difference between FIG. 11A and FIG. 11B lies in that the first duration varies, which will be described below in S1004. For example, the AP starts timing when transmission of the trigger frame is completed, and the timing ends when the SIFS elapses. When the timing ends, the AP may transmit the first information. The SIFS corresponds to processing time of a receiving end of the trigger frame, for example, the first STA or the first STA and the second STA. That is, it is generally considered that after the AP completes transmission of the trigger frame and the SIFS elapses, the receiving end of the trigger frame has completed reception of the trigger frame. In other words, a time point at which the AP completes waiting for the SIFS and a time point at which the receiving end completes reception of the trigger frame may be aligned. Therefore, when the AP transmits the first information after waiting for the SIFS, and the first STA transmits uplink data after waiting for the first duration upon receiving the trigger frame, timing may be aligned.

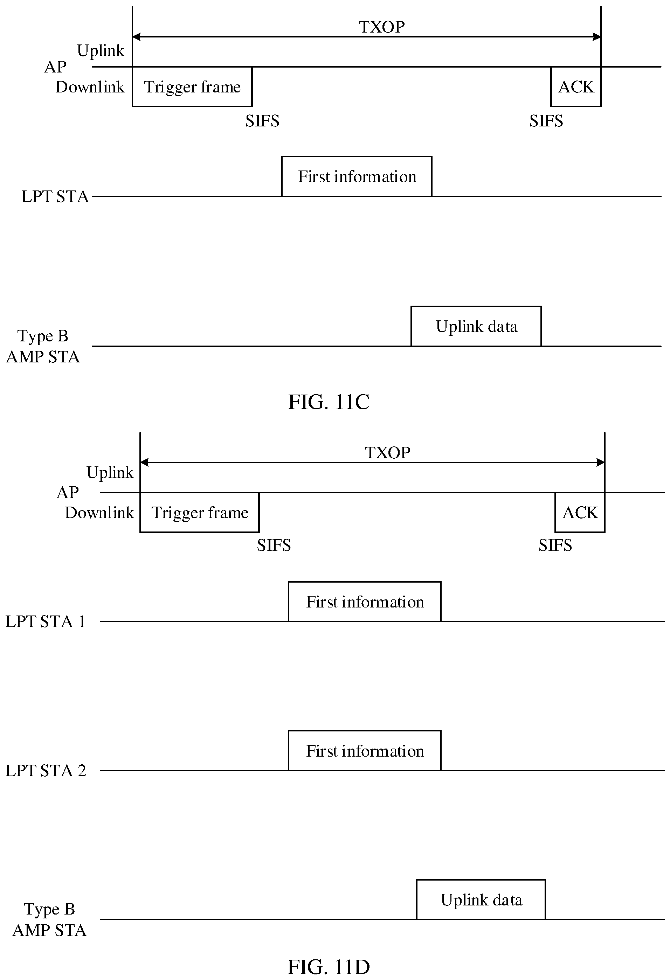

If the first information is transmitted by the second STA, the second STA may transmit the first information when reception of the trigger frame in S1001 is completed. For details, refer to FIG. 11C, in which the second STA is an LPT STA. FIG. 11C illustrates an example in which transmission of the excitation signal is not required, and the trigger frame triggers a Type B AMP STA to transmit uplink data. The time at which the second STA completes reception of the trigger frame may be aligned with the time at which the SIFS elapses after the AP transmits the trigger frame. In FIG. 11C, after receiving the trigger frame, the Type B AMP STA waits for a first duration and then transmits uplink data.

According to the foregoing description of the trigger frame, the trigger frame may trigger one or more second-type STAs to transmit the first information, and/or the AP may transmit the first information after transmitting the trigger frame. For example, if only one second-type STA transmits the first information, or only the AP transmits the first information, the coverage area of the first information is limited. In this case, some STAs may not receive the first information, and these STAs may not keep silent when the first STA transmits uplink data, but may transmit data, thereby potentially causing interference to the uplink data of the first STA. Therefore, in embodiments of this application, the AP may trigger, by using the trigger frame, one or more second-type STAs to transmit the first information, and/or the AP may transmit the first information. Using more devices to transmit the first information can expand the coverage area of the first information, so that more STAs can receive the first information, thereby reducing interference to the uplink data of the first STA. If the AP triggers multiple second-type STAs to transmit the first information via the trigger frame, which second-type STAs are triggered to transmit the first information may be determined by the AP. If both the AP and the second-type STAs transmit the first information, the AP may transmit the first information when the SIFS elapses after completion of transmission of the trigger frame, and the second-type STAs may transmit the first information upon completion of reception of the trigger frame. That is, the transmission manners of the first information are similar.

For example, referring to FIG. 11D, an example is provided in which the AP triggers two second-type STAs (LPT STA 1 and LPT STA 2 in FIG. 11D) to transmit the first information, and the AP does not transmit the first information. For example, one of these two STAs is the second STA. In addition, FIG. 11D illustrates an example in which transmission of the excitation signal is not required, and the trigger frame triggers a Type B AMP STA to transmit uplink data. The two or more second-type STAs triggered by the AP may all transmit the first information upon completion of reception of the trigger frame in S1001. For example, the time at which these two second-type STAs complete reception of the trigger frame may be aligned with the time at which the SIFS elapses after the AP transmits the trigger frame. In FIG. 11D, after receiving the trigger frame, the Type B AMP STA waits for a first duration and then transmits uplink data.

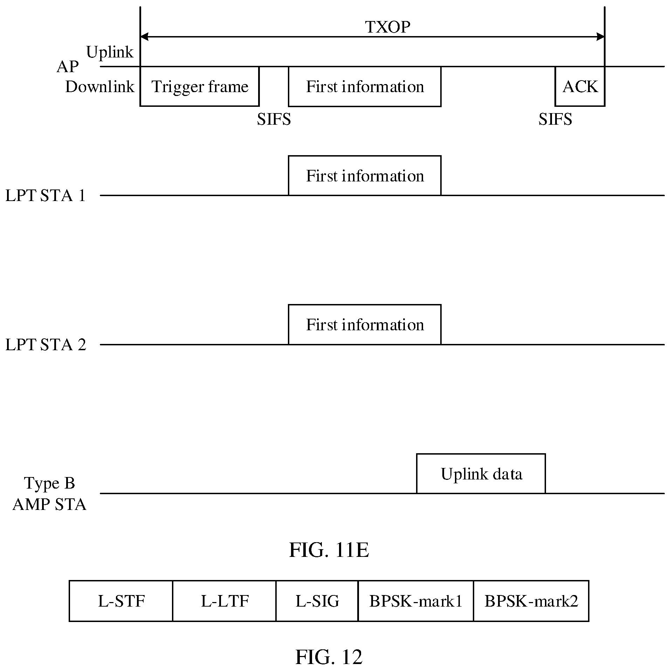

Further, referring to FIG. 11E, FIG. 11E illustrates an example in which the AP transmits the first information and triggers two second-type STAs (LPT STA 1 and LPT STA 2 in FIG. 11E) to transmit the first information. One of these two STAs may be the second STA. In addition, FIG. 11E illustrates an example in which transmission of the excitation signal is not required, and the trigger frame triggers a Type B AMP STA to transmit uplink data. The AP may transmit the first information when the SIFS elapses after completion of transmission of the trigger frame in S1001, where the SIFS may be, for example, 16 µs. The two or more second-type STAs triggered by the AP may all transmit the first information upon completion of reception of the trigger frame in S1001. For example, the time at which these two second-type STAs complete reception of the trigger frame may be aligned with the time at which the SIFS elapses after the AP transmits the trigger frame, that is, the AP and the two second-type STAs may transmit the first information at the same time. In FIG. 11E, after receiving the trigger frame, the Type B AMP STA waits for a first duration and then transmits uplink data. Optionally, the transmission power of the AP may be greater than that of a STA, and therefore the coverage area of the first information transmitted by the AP may be wider. In addition, when the AP also participates in transmitting the first information, more STAs may keep silent during uplink transmission of the first STA.

In the embodiment shown in FIG. 3, the first information is described as enabling a third STA not to transmit data when a first STA transmits uplink data, or enabling the third STA to keep silent when the first STA transmits uplink data. The third STA may include at least one STA other than the first STA, for example including the second STA, or may not include the second STA. It can be understood that, by using the first information, one or more STAs other than the first STA may keep silent when the first STA transmits uplink data, thereby reducing interference to the uplink data.

For example, whether the AP or the second-type STA transmits the first information, the first information may be transmitted in a second bandwidth. According to the foregoing description, the first STA (or the first-type STA) does not support the second bandwidth. Therefore, the first STA (or the first-type STA) cannot transmit the first information. Therefore, in embodiments of this application, the AP and/or the second-type STA may replace the first STA (or the first-type STA) to transmit the first information, so that the first STA can transmit uplink data in a case of relatively slight interference.

The first-type STA is a STA that is unable to transmit first information, or a STA supporting a bandwidth of less than 20 MHz. For example, the first-type STA supports a first bandwidth, where the first bandwidth is relatively small, for example, less than 20 MHz, whereas the transmission bandwidth of the first information is a second bandwidth, where the second bandwidth is relatively large, for example, 20 MHz, or may be larger than 20 MHz. To be specific, if the first information is to be transmitted, the first information should be transmitted in the second bandwidth. However, because the first-type STA does not support the second bandwidth, the first-type STA cannot transmit the first information.

The second-type STA is, for example, a STA configured to transmit the first information and/or configured to transmit an excitation signal to a STA that is unable to transmit the first information (for example, the first-type STA). For example, a second-type STA supports a second bandwidth, and therefore the second-type STA may transmit the first information. For another example, the second-type STA has an energy storage capability and is capable of transmitting a radio frequency signal (for example, an excitation signal). Therefore, the second-type STA can transmit an excitation signal to the first-type STA.

For more descriptions of concepts such as the first-type STA and the second-type STA, reference may be made to the embodiment shown in FIG. 3.

In the embodiment shown in FIG. 3, the first information is described as including a legacy preamble or a short frame. For related content, refer to the embodiment shown in FIG. 3.

In an optional implementation of the legacy preamble, the legacy preamble may include an L-STF, an L-LTF, and an L-SIG. For details, refer to FIG. 1. The duration of the legacy preamble is, for example, 20 µs. The relatively short duration of the legacy preamble reduces the waiting time for the first STA, thereby improving transmission efficiency of uplink data.

Alternatively, in another optional implementation of the legacy preamble, the legacy preamble may include an L-STF, an L-LTF, an L-SIG, a BPSK-mark1, and a BPSK-mark2. For details, refer to FIG. 12. For example, the format of the legacy preamble is a format defined in IEEE 802.11ba, which is also the format of a legacy preamble in a PPDU used for WUR. The following describes why the legacy preamble may include the L-STF, the L-LTF, the L-SIG, the BPSK-mark1, and the BPSK-mark2.

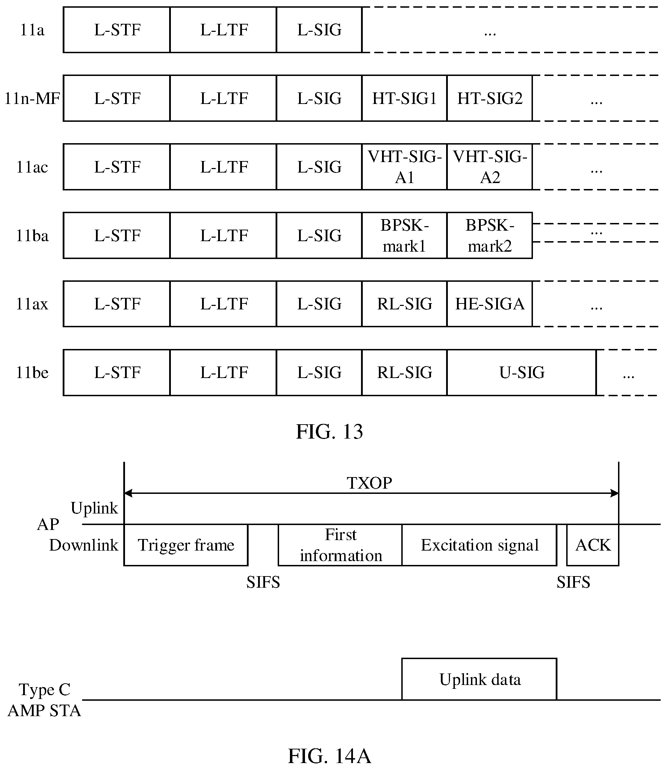

Refer to FIG. 13, which is a diagram of several formats of the legacy preamble. In FIG. 13, 11a represents 802.11a, 11n-mixed format (mixed format, MF) represents 802.11n-MF, 11ac represents 802.11ac, 11ba represents 802.11ba, 11ax represents 802.11ax, and 11be represents 802.11be. It can be seen that different versions of the legacy preamble may include different content. For example, the legacy preamble of 802.11n-MF includes HT-SIG1 and HT-SIG2; the legacy preamble of 802.11ac includes very high throughput (very high throughput, VHT)-SIG-A1 and VHT-SIG-A2; the legacy preamble of 802.11ac includes a repeat L-SIG (repeat L-SIG, RL-SIG) and a high efficiency signal A (HE-SIGA) field; and the legacy preamble of 802.11be includes an RL-SIG and a universal signal (U-SIG) field. In addition, after the legacy preamble of 802.11ba, two dashed lines following the legacy preamble are narrower than those corresponding to other versions of legacy preambles. This indicates that the bandwidth of the legacy preamble of 802.11ba is different from that of subsequent content (for example, including a synchronization field, data, and the like, as shown in FIG. 4). The bandwidth of the legacy preamble may be greater than that of the subsequent content.

WLAN system devices have backward compatibility. For example, a device supporting the 802.11ax standard can transmit not only PPDU defined by 802.11ax, but also PPDU defined by 802.11a, PPDU defined by 802.11n-MF, PPDU defined by 802.11ac, and PPDU defined by 802.11ba. Meanwhile, a higher-version receiver is also capable of recognizing and receiving PPDU of the same version and PPDU of various lower versions.

For example, in 802.11n-MF, both HT-SIG1 and HT-SIG2 fields use quadrature BPSK (quadrature BPSK, QBPSK) modulation, where QBPSK refers to rotating the constellation diagram of BPSK by 90 degrees. In 802.11ac, VHT-SIG-A1 and VHT-SIG-A2 use BPSK and QBPSK modulation, respectively. For 802.11ba, backward compatibility may be achieved by one or more of the following:
(1) The BPSK-mark1 of 802.11ba may employ BPSK modulation, whereas both HT-SIG1 and HT-SIG2 fields of 802.11n-MF employ QBPSK modulation, so that a receiver of 802.11n-MF can determine, based on this difference, that the PPDU of 802.11ba is not a PPDU that the receiver of 802.11n-MF should receive.
(2) The BPSK-mark2 field of 802.11ba may adopt BPSK modulation, whereas VHT-SIG-A1 and VHT-SIG-A2 in 802.11ac adopt BPSK and QBPSK modulation respectively, so that a receiver of 802.11ac can determine, based on this difference, that the PPDU of 802.11ba is not a PPDU intended to be received by the 802.11ac receiver.
(3) In a PPDU of 802.11ax, RL-SIG and HE-SIGA both employ BPSK modulation; however, in the PPDU, RL-SIG is located after L-SIG. Therefore, a receiver of 802.11ax may determine, based on repetition characteristics between L-SIG and RL-SIG and on the fact that a length of L-SIG is not divisible by 3, whether a PPDU is a PPDU intended to be received by the 802.11ax receiver.
(4) In 802.11be PPDU, RL-SIG and U-SIG also both adopt BPSK modulation, and similar to 802.11ax PPDU, RL-SIG also follows L-SIG. However, starting from 802.11be, U-SIG is added in the legacy preamble, and a PHY version identifier is included in the U-SIG. The PHY version identifier is "0", indicating EHT, whereas values "1" to "7" are reserved. Through this PHY version identifier, the 802.11be PPDU can be explicitly indicated.

It can be seen that by adopting a PPDU or legacy preamble in the foregoing format, receivers of different protocol versions can identify the PPDU intended to be received by the corresponding receiver, that is, the PPDU or legacy preamble has an automatic detection capability. The legacy preamble or PPDU in embodiments of this application may also have an automatic detection capability. Therefore, optionally, a format of a legacy preamble in embodiments of this application may use a format similar to that of 802.11ba. For example, the legacy preamble in embodiments of this application may include L-STF, L-LTF, L-SIG, BPSK-mark1, and BPSK-mark2. Considering that WUR devices also use a PPDU or legacy preamble in this format, in order to distinguish from WUR, optionally, the synchronization sequence included in the PPDU in embodiments of this application may be different from the synchronization sequence included in the PPDU corresponding to WUR devices. In this way, the receiving end of the PPDU can distinguish whether the received PPDU is a WUR PPDU or a PPDU of embodiments of this application (for example, an AMP PPDU). For example, the synchronization sequence may be included in a synchronization field of the PPDU. For the synchronization field, refer to FIG. 4.

S1003: The AP transmits an excitation signal, and/or the second STA transmits an excitation signal. Alternatively, S1003 may also be understood as that the AP transmits the excitation signal and/or the trigger frame further triggers the second STA to transmit the excitation signal. Therefore, the AP transmits the excitation signal and/or the second STA transmits the excitation signal.

According to the embodiment shown in FIG. 3 or the foregoing description of the trigger frame, the trigger frame may trigger a second-type STA to transmit the first information and/or the excitation signal. The second STA is one of the one or more second-type STAs, and FIG. 10 illustrates the second STA as an example. For example, if the first STA does not have an energy storage capability or has a limited energy storage capability, and therefore cannot transmit uplink data using energy provided by the first STA itself, the AP and/or the second-type STA may transmit the excitation signal to the first STA, so that the first STA can transmit uplink data by utilizing energy of the excitation signal, thereby improving the transmission success probability of uplink data from the first STA.

According to the foregoing description of the trigger frame, it can be learned that the excitation signal may be transmitted, or may not be transmitted, and reasons are not repeated herein. If the excitation signal is not necessarily transmitted, S1003 may be omitted, and thus S1003 is an optional step.

If transmission of the excitation signal is required, the AP may transmit the first information and the excitation signal, and may not trigger the second-type STA to transmit the first information and the excitation signal; or the AP may transmit the first information and the excitation signal, and may also trigger the second-type STA via the trigger frame to transmit the first information and/or the excitation signal, for example triggering the second STA to transmit the first information and/or the excitation signal; or the AP may not transmit the first information and the excitation signal, and may trigger the second-type STA via the trigger frame to transmit the first information and the excitation signal, for example triggering the second STA to transmit the first information and the excitation signal; or the AP may transmit the first information, and trigger the second-type STA via the trigger frame to transmit the excitation signal, for example triggering the second STA to transmit the excitation signal; or the AP may transmit the excitation signal, and trigger the second-type STA via the trigger frame to transmit the first information, for example triggering the second STA to transmit the first information; or the AP may transmit the first information, and trigger the second-type STA via the trigger frame to transmit the first information and the excitation signal, for example triggering the second STA to transmit the first information and the excitation signal; or the AP may transmit the excitation signal, and trigger the second-type STA via the trigger frame to transmit the first information and the excitation signal, for example triggering the second STA to transmit the first information and the excitation signal, and the like. The specific device or devices that transmit the first information or the excitation signal may be determined by the AP.

If the AP transmits the first information and the excitation signal, optionally, the AP may transmit the first information when the SIFS elapses after completion of transmission of the trigger frame in S1001. The SIFS may be, for example, 16 µs. After completion of transmission of the first information, the AP may transmit the excitation signal. For details, refer to FIG. 14A. FIG. 14A illustrates an example in which the trigger frame triggers a Type C AMP STA to transmit uplink data. In FIG. 14A, after receiving the trigger frame, the Type C AMP STA waits for a first duration and then transmits uplink data, which will be described in detail in a later step. For example, the AP starts timing when transmission of the trigger frame is completed, and the timing ends when the SIFS elapses. When the timing ends, the AP may transmit the first information. After completion of transmission of the first information, the AP may transmit the excitation signal. For the SIFS, reference may be made to the embodiment shown in FIG. 3.

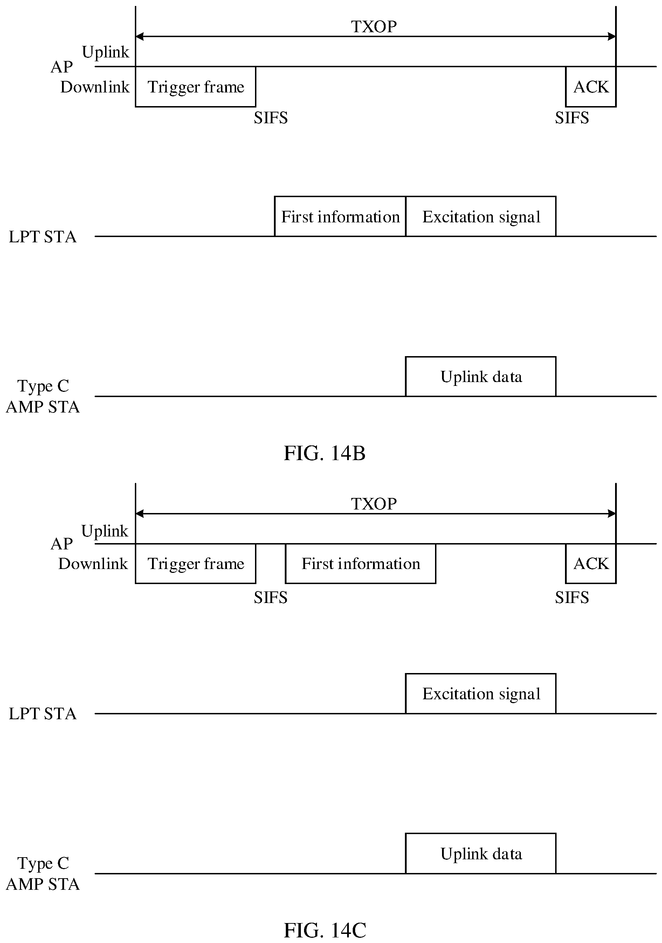

Alternatively, if the first information and the excitation signal are transmitted by the second STA, and the AP does not transmit the first information and the excitation signal, the second STA may transmit the first information upon completion of reception of the trigger frame in S1001, and may transmit the excitation signal after completion of transmission of the first information. For details, refer to FIG. 14B, in which the second STA is an LPT STA, and the trigger frame triggers a Type C AMP STA to transmit uplink data. The time at which the second STA completes reception of the trigger frame may be aligned with the time at which the SIFS elapses after the AP transmits the trigger frame. In FIG. 14B, after receiving the trigger frame, the Type C AMP STA waits for a first duration and then transmits uplink data.

Alternatively, if the AP transmits the first information but does not transmit the excitation signal, and the second STA transmits the excitation signal but does not transmit the first information, optionally, the AP may transmit the first information when the SIFS elapses after completion of transmission of the trigger frame in S1001. The SIFS may be, for example, 16 µs. For the second STA, the second STA may transmit the excitation signal when the first duration elapses after completion of reception of the trigger frame, and the timing of transmitting the excitation signal may be aligned with the completion time of transmission of the first information. Reference may be made to FIG. 14C, in which the second STA is an LPT STA, and the trigger frame triggers a Type C AMP STA to transmit uplink data. For example, the second STA may start timing upon completion of reception of the trigger frame, and transmit the excitation signal when the first duration elapses. In FIG. 14C, after receiving the trigger frame, the Type C AMP STA waits for the first duration and then transmits uplink data.

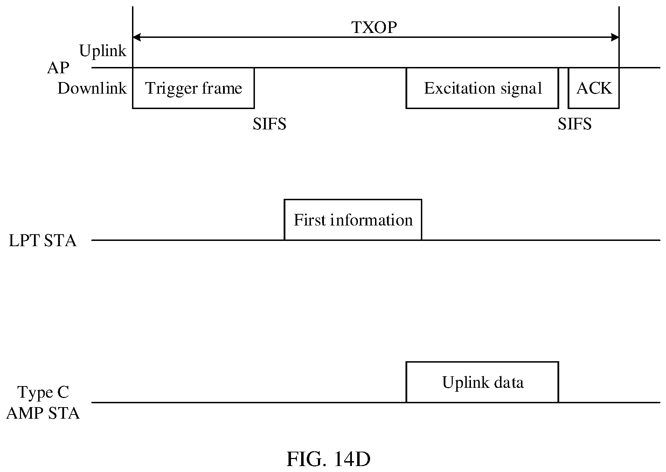

Alternatively, if the AP transmits the excitation signal but does not transmit the first information, and the second STA transmits the first information but does not transmit the excitation signal, optionally, the second STA may transmit the first information upon completion of reception of the trigger frame in S1001, and the AP may transmit the excitation signal after completion of transmission of the trigger frame in S1001 and after the SIFS elapses, and further after the first duration elapses. For details, refer to FIG. 14D. FIG. 14D illustrates an example in which the second STA is an LPT STA, and the trigger frame triggers a Type C AMP STA to transmit uplink data. In FIG. 14D, after receiving the trigger frame, the Type C AMP STA waits for a first duration and then transmits uplink data.

The foregoing FIG. 14A to FIG. 14D are all described using one STA (the second STA) as an example. According to the foregoing description of the trigger frame, it can be learned that the trigger frame may trigger at least one STA to transmit the first information and/or the excitation signal, and/or the AP may transmit the first information and/or the excitation signal. For example, if only one STA transmits the first information and/or the excitation signal, or only the AP transmits the first information and/or the excitation signal, the coverage area of the first information is limited. In this case, some STAs may not receive the first information, and these STAs may not keep silent when the first STA transmits uplink data, but may transmit data, thereby potentially causing interference to the uplink data of the first STA. Therefore, in embodiments of this application, the AP may trigger at least one STA to transmit the first information via the trigger frame, and/or the AP may transmit the first information. By enabling more devices to transmit the first information, the coverage area of the first information can be increased, so that more STAs can receive the first information, thereby reducing interference to the uplink data of the first STA. For the excitation signal, if only one STA transmits the excitation signal, or only the AP transmits the excitation signal, the energy of the excitation signal is limited. In this case, the first STA may not receive the excitation signal, or the energy of the excitation signal may be significantly attenuated when it reaches the first STA, resulting in that the first STA cannot obtain sufficient energy to transmit uplink data. Therefore, in embodiments of this application, the AP may trigger at least one STA to transmit the excitation signal via the trigger frame, and/or the AP may transmit the excitation signal. By enabling more devices to transmit the excitation signal, the energy of the excitation signal can be increased, so that the first STA can obtain sufficient energy from the excitation signal to transmit uplink data. As for which STAs are specifically triggered by the AP to transmit the first information and/or the excitation signal, this may be determined by the AP.

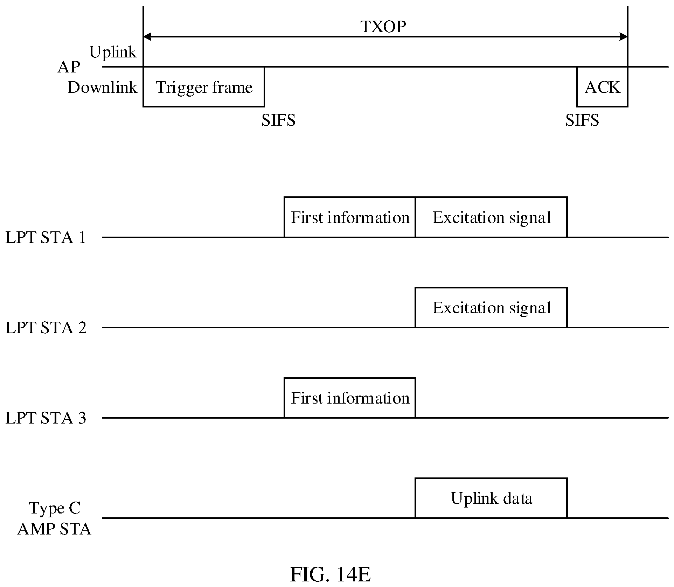

For example, the AP triggers three second-type STAs (for example, LPT STA1, LPT STA2, and LPT STA3) to transmit the first information and/or the excitation signal. In this example, the AP instructs LPT STA1 to transmit the first information and the excitation signal, instructs LPT STA2 to transmit the excitation signal, and instructs LPT STA3 to transmit the first information. In this case, the AP does not transmit the first information or the excitation signal. LPT STA1 may transmit the first information upon completion of reception of the trigger frame in S1001, and when the first information transmission is completed, LPT STA1 may transmit the excitation signal; LPT STA2 may transmit the excitation signal when a first duration elapses after completion of reception of the trigger frame; LPT STA3 may transmit the first information upon completion of reception of the trigger frame in S1001. For details, refer to FIG. 14E, which illustrates an example in which the trigger frame triggers a Type C AMP STA to transmit uplink data. In FIG. 14E, after receiving the trigger frame, the Type C AMP STA waits for a first duration and then transmits uplink data.

If a plurality of second-type STAs transmit the excitation signal, optionally, the AP may select STAs whose distances to the first STA are not significantly different from that of the first STA to transmit the excitation signal. For example, an absolute difference between distances from any two STAs participating in transmitting the excitation signal and the first STA may be less than or equal to a first threshold, that is, the distances between these two STAs and the first STA are not significantly different. In this case, the excitation signals transmitted by the STAs participating in transmitting the excitation signal may arrive at the first STA at approximately the same time, for example may arrive at the first STA simultaneously, thereby reducing the probability that the excitation signals are partially cancelled due to different propagation delays. If the AP also participates in transmitting the excitation signal, for example, both the AP and the second STA transmit the excitation signal, the distance between the AP and the first STA and the distance between the second STA and the first STA may be less than or equal to a first threshold. That is, the distances from different devices participating in transmitting the excitation signal (including the AP and/or the STA) to the first STA may be approximately the same, so that the excitation signals transmitted by these devices can be caused to arrive at the first STA at substantially the same time. For the first STA, this is equivalent to receiving an energy-superposed excitation signal, which helps the first STA obtain greater energy to transmit uplink data.

In addition to the scenarios shown in FIG. 14A to FIG. 14E, according to the foregoing description, the AP and/or the second STA may transmit the first information and/or the excitation signal in various other manners, and the transmission processes are similar, and therefore are not further illustrated with drawings.

In FIG. 11A to FIG. 11D and FIG. 14A to FIG. 14E, the AP may further transmit an acknowledgment (ACK). The ACK is, for example, an ACK corresponding to the first uplink data (to be described in the next step), for example, indicating whether the first uplink data is successfully received or not. Optionally, the AP may transmit the ACK when a SIFS period after completion of transmission of the first uplink data by the first STA is reached, and the SIFS may be regarded as the transmission time of the first uplink data. Alternatively, the AP may also transmit the ACK immediately upon completion of reception of the first uplink data.

S1004: The first STA transmits the first uplink data. Correspondingly, the AP receives the first uplink data.

S1004 may be the same as S303 in the embodiment shown in FIG. 3.

If the first STA does not need to transmit the first uplink data by a backscatter-based manner, and instead may transmit the first uplink data using energy provided by the first STA itself, the first STA may transmit the first uplink data when a first duration after completion of reception of the trigger frame in S301 is reached; or, if the first STA does not need to transmit the first uplink data using energy of the received excitation signal and instead may transmit the first uplink data using energy provided by the first STA itself, the first STA may transmit the first uplink data when a first duration after completion of reception of the trigger frame in S1001 is reached. Reference may be made to the relevant description of the first implementation of the trigger frame described above regarding the backscatter-based manner.

Alternatively, if the first STA transmits the first uplink data in a backscatter-based manner, or if the first STA transmits the first uplink data based on reception of the excitation signal, the first STA may transmit the first uplink data upon receiving the excitation signal or after receiving the excitation signal. The excitation signal may be transmitted from the AP and/or at least one second-type STA (including the second STA). Due to the consideration that the excitation signal has a propagation delay and is transmitted when transmission of the first information is completed, the excitation signal may not be immediately received by the first STA when the first duration after completion of reception of the trigger frame in S1001 is reached. Therefore, optionally, when the first duration after completion of reception of the trigger frame in S1001 is reached, the first STA may start to monitor the excitation signal, and may transmit the first uplink data using energy obtained from the excitation signal upon receiving the excitation signal or after receiving the excitation signal. FIG. 14A to FIG. 14E illustrate an example in which the excitation signal start transmission time is aligned with the transmission time of the first uplink data of the first STA. In practical applications, the transmission time of the first uplink data of the first STA may be later than the excitation signal start transmission time. Because transmission of the first uplink data by the first STA may last for a period of time, the operation of transmitting the excitation signal by the transmission side of the excitation signal (for example, the AP and/or at least one second-type STA) may also last for a period of time. If the transmission side of the excitation signal includes the AP, transmission of the excitation signal and reception of the uplink data by the AP may be performed simultaneously. Therefore, the AP may transmit the excitation signal and receive the uplink data using different antennas. Optionally, if the AP transmits the first information and the excitation signal, transmission of the first information and the excitation signal by the AP may use the same antenna, or may use different antennas.

The first uplink data may be included in a second PPDU, and the second PPDU is an uplink PPDU. Optionally, the first STA may further transmit a first preamble in addition to transmitting the first uplink data. For example, the first preamble and the first uplink data are included in the second PPDU. In this case, "the first STA transmits the first uplink data" described in embodiments of this application may also be replaced with "the first STA transmits the second PPDU". The transmission bandwidth of the first preamble may be, for example, a first bandwidth, that is, the first preamble may be a preamble that is transmitted over a relatively small bandwidth. The first bandwidth is a bandwidth supported by the first STA, so that the first STA is capable of transmitting the first preamble. In addition, the transmission bandwidth of the first uplink data may also be, for example, the first bandwidth, so that the first STA is capable of transmitting the first uplink data. The first preamble may also be referred to as an AMP preamble, or may have other names. For example, the first preamble may include a synchronization sequence for synchronization at a receiving device (for example, an AP) of the first uplink data. Optionally, the first preamble may further include a SIG field, and the SIG field may indicate information such as a length of the first uplink data and/or an MCS.

The first bandwidth may be, for example, 4 MHz, or may be greater than or less than 4 MHz. The second bandwidth is greater than the first bandwidth. The second bandwidth may be, for example, a bandwidth supported by both the AP and the second-type STA, such as 20 MHz, or may also be greater than or less than 20 MHz.

As described above, the first STA may transmit the first uplink data when a first duration after completion of reception of the trigger frame is reached, and the first duration may have different implementations. For example, the first duration may be a duration of the first information; alternatively, the first duration may be a sum of the duration of the first information and a SIFS. Taking the first STA as a B-type STA as an example, when the AP transmits the first information, if transmission of the first information by the AP and reception of the first uplink data are performed using different antennas, the first duration may be the duration of the first information. For details, refer to FIG. 11A; alternatively, if transmission of the first information by the AP and reception of the first uplink data are performed using the same antenna, the first duration may be the sum of the duration of the first information and a SIFS. For details, refer to FIG. 11B.

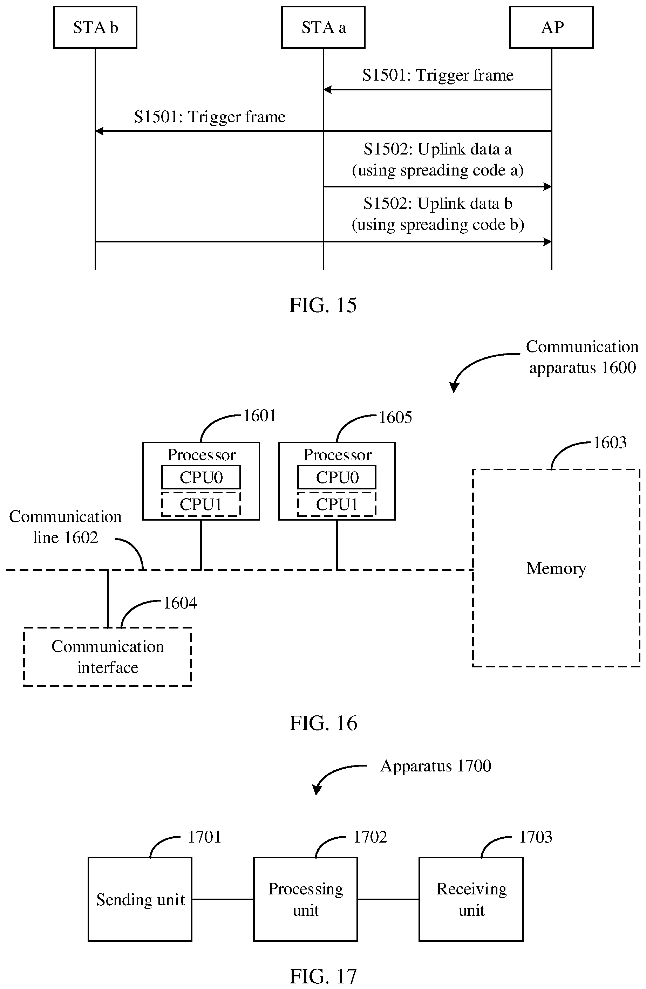

Optionally, the AP may trigger one or more STAs to transmit uplink data by using a trigger frame. Reference may be made to S1501 in FIG. 15 for this step. The communication method shown in FIG. 15 is described by taking an example in which the AP triggers a plurality of STAs, and the plurality of STAs include STA a and STA b. For example, in embodiments of this application, the AP may trigger one or more first-type STAs to transmit uplink data by using the trigger frame, and the first STA is one of the first-type STAs.

If the AP triggers a plurality of STAs to transmit uplink data, optionally, different STAs among the plurality of STAs may transmit uplink data using different spreading codes. That is, different STAs may transmit uplink data using different frequency-division multiplexing manners, so as to reduce a probability of uplink data collision. For example, with reference to S1502 in FIG. 15, STA a transmits uplink data a to the AP, and STA b transmits uplink data b to the AP. The uplink data a is transmitted using a spreading code a, and the uplink data b is transmitted using a spreading code b. For example, one STA among the plurality of STAs (for example, including STA a and STA b) is the first STA. The first STA may transmit uplink data by using a direct sequence spread spectrum (direct sequence spread spectrum, DSSS) modulation manner, whereas other STAs among the plurality of STAs except the first STA may transmit uplink data by using other spreading modulation manners. Optionally, the spreading code (or spreading manner) used by each STA may be determined by the STA itself, or may be indicated by the AP. For example, the AP may indicate the spreading code to each STA through the trigger frame (for example, the trigger frame in S1501 in embodiments of this application). For any one STA, the spreading code used by the STA may be indicated through a user information field corresponding to the STA in the trigger frame. Alternatively, the AP may indicate the spreading code to each STA through other manners (for example, by transmitting other information), and this is not limited.

Alternatively, if the AP triggers a plurality of STAs to transmit uplink data, the plurality of STAs may reduce collisions not by using different spreading codes, but by using other manners, for example, by using time division multiplexing and/or code division multiplexing, and this is not limited.

The related content shown in FIG. 15 may be combined with the embodiment shown in FIG. 3 or the embodiment shown in FIG. 10, or may not be combined with the embodiment shown in FIG. 3 or the embodiment shown in FIG. 10, but may be used as an independent embodiment. If the embodiment shown in FIG. 15 is combined with the embodiment shown in FIG. 3, S1501 and S301 in the embodiment shown in FIG. 3 may be a same step, and S1502 and S303 in the embodiment shown in FIG. 3 may be a same step; alternatively, if the embodiment shown in FIG. 15 is combined with the embodiment shown in FIG. 10, S1501 and S1001 in the embodiment shown in FIG. 10 may be a same step, and S1502 and S1004 in the embodiment shown in FIG. 10 may be a same step.

Alternatively, if the content shown in FIG. 15 is an independent embodiment, types of the plurality of STAs are not limited. For example, the plurality of STAs may include first-type STAs and/or second-type STAs, or may include other STAs. In addition, if the content shown in FIG. 15 is an independent embodiment, a format of the trigger frame used to indicate the spreading code or other information is not limited. For example, the trigger frame may be implemented using any one of the two implementations of the trigger frame described above, or may be implemented using a conventional format.

In summary, in embodiments of this application, the AP may transmit the first information and/or may trigger the second-type STA to transmit the first information, and the first STA that does not support the second bandwidth does not need to transmit the first information in the second bandwidth, but transmits uplink data in the supported first bandwidth. The first information may be used to cause a third STA not to transmit data when the first STA transmits uplink data. For example, the third STA may keep silent when the first STA transmits uplink data. This is equivalent to that the AP and/or the second-type STA replaces the first STA incapable of transmitting the first information to transmit the first information, so that even if the first STA cannot transmit the first information, interference during transmission of uplink data may be relatively slight because other devices (the AP and/or the second-type STA) replace the first STA to transmit the first information, which is beneficial to improving a success rate of transmitting the uplink data of the first STA.

FIG. 16 is a diagram of a structure of a communication apparatus according to an embodiment of this application. The communication apparatus 1600 may be the AP or a circuit system in the AP described in any one of embodiments shown in FIG. 3, FIG. 10, or FIG. 15, and is configured to implement the method corresponding to the AP in the foregoing method embodiments. Alternatively, the communication apparatus 1600 may be the first STA or a circuit system in the first STA described in any one of embodiments shown in FIG. 3, FIG. 10, or FIG. 15, and is configured to implement the method corresponding to the first STA in the foregoing method embodiments. Alternatively, the communication apparatus 1600 may be the second STA or a circuit system in the second STA described in the embodiment shown in FIG. 3 or FIG. 10, and is configured to implement the method corresponding to the second STA in the foregoing method embodiments. For example, the circuit system may be a chip or a chip system.

The communication apparatus 1600 includes at least one processor 1601. The processor 1601 may be configured for internal processing of the apparatus, to implement a specific control processing function. Optionally, the processor 1601 includes instructions. Optionally, the processor 1601 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1600 includes one or more memories 1603 configured to store instructions. Optionally, the memory 1603 may further store data. The processor and the memory may be separately disposed, or may be integrated together.

Optionally, the communication apparatus 1600 includes a communication line 1602 and at least one communication interface 1604. Because the memory 1603, the communication line 1602, and the communication interface 1604 are optional components, these components are shown by dashed lines in FIG. 16.

Optionally, the communication apparatus 1600 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1600 through the antenna. Optionally, the transceiver includes a transmitter (transmitter) and a receiver (receiver). For example, the transmitter may be configured to convert a baseband signal into a radio frequency (radio frequency) signal, and the receiver may be configured to convert an excitation signal into a baseband signal.

The processor 1601 may include a general-purpose central processing unit (central processing unit, CPU), a microprocessor, an application specific integrated circuit (application specific integrated circuit, ASIC), or one or more integrated circuits configured to control program execution of solutions of this application.

The communication line 1602 may include a path for transmitting information between the foregoing components.

The communication interface 1604 uses any transceiver-type apparatus to communicate with other devices or communication networks, such as an ethernet, a radio access network (radio access network, RAN), a wireless local area network (wireless local area network, WLAN), or a wired access network.

The memory 1603 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or data structures and capable of being accessed by a computer, but is not limited thereto. The memory 1603 may exist independently, and is connected to the processor 1601 through the communication line 1602. Alternatively, the memory 1603 may be integrated with the processor 1601.

The memory 1603 is configured to store computer-executable instructions for performing the solutions in this application, and the processor 1601 controls execution of the computer-executable instructions. The processor 1601 is configured to execute computer-executable instructions stored in the memory 1603, so as to implement the steps performed by the AP, the first STA, or the second STA in any of embodiments shown in FIG. 3, FIG. 10, or FIG. 15.

Optionally, the computer-executable instructions in embodiments of this application may also be referred to as application program code, and embodiments of this application are not specifically limited in this respect.

In a specific implementation, as an embodiment, the processor 1601 may include one or more CPUs, for example, CPU0 and CPU1 shown in FIG. 16.

In a specific implementation, as an embodiment, the communication apparatus 1600 may include a plurality of processors, for example, the processor 1601 and the processor 1605 shown in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

When the communication apparatus 1600 shown in FIG. 16 is a chip, for example a chip of the first STA, a chip of the second STA, or a chip of the AP, the chip includes the processor 1601 (and may further include the processor 1605), the communication line 1602, and the communication interface 1604. Optionally, the chip may further include the memory 1603. Specifically, the communication interface 1604 may be an input interface, a pin, or a circuit, etc. The memory 1603 may be a register, a cache, and the like. The processor 1601 and the processor 1605 may be a general-purpose CPU, a microprocessor, an ASIC, or one or more integrated circuits configured to control execution of a program for implementing the communication method in any of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when functional modules are divided according to corresponding functions, FIG. 17 shows a diagram of an apparatus. The apparatus 1700 may be an AP, a first STA, or a second STA involved in the foregoing method embodiments. The apparatus 1700 includes a transmitting unit 1701, a processing unit 1702, and a receiving unit 1703. The transmitting unit 1701 and the receiving unit 1703 may be two functional units, which respectively implement a transmitting function and a receiving function; alternatively, the transmitting unit 1701 and the receiving unit 1703 may be a same functional unit, and the functional unit may implement both the transmitting function and the receiving function.

It should be understood that the apparatus 1700 may be used to implement the steps performed by the AP, the first STA, or the second STA in the communication method of embodiments of this application. Related features may refer to any of embodiments shown in FIG. 3, FIG. 10, or FIG. 15, and are not further described herein.

Optionally, the functions and/or implementation processes of the transmitting unit 1701, the receiving unit 1703, and the processing unit 1702 in FIG. 17 may be implemented by the processor 1601 in FIG. 16 invoking computer-executable instructions stored in the memory 1603. Alternatively, the function and/or implementation process of the processing unit 1702 in FIG. 17 may be implemented by the processor 1601 in FIG. 16 invoking computer-executable instructions stored in the memory 1603, and the functions and/or implementation processes of the transmitting unit 1701 and the receiving unit 1703 in FIG. 17 may be implemented by the communication interface 1604 in FIG. 16.

Optionally, when the apparatus 1700 is a chip or a circuit, the functions/implementation processes of the transmitting unit 1701 and the receiving unit 1703 may alternatively be implemented by a pin, a circuit, or the like.

This application further provides a computer-readable storage medium. The computer-readable storage medium stores a computer program or instructions. When the computer program or the instructions are run, the method performed by the AP, the first STA or the second STA in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the AP, the first STA or the second STA in any one of the foregoing method embodiments.

An embodiment of this application further provides a processing apparatus, including a processor and an interface. The processor is configured to perform the method performed by the AP, the first STA or the second STA in any one of the foregoing method embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor so that the processor may read information from the storage medium and write information to the storage medium. Alternatively, the storage medium may be integrated into a processor. The processor and the storage medium may be disposed in an ASIC, and the ASIC may be disposed in a terminal device. Optionally, the processor and the storage medium may be alternatively disposed in different components of the terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the AP and/or the first STA and/or the second STA may perform some or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, applied to an access point device, wherein the method comprises:
transmitting a trigger frame, wherein the trigger frame is used to trigger a first station to transmit first uplink data, and the first station is a station incapable of transmitting first information;
transmitting the first information, and/or the trigger frame is further used to trigger a second station to transmit the first information, wherein the first information is used to cause a third station not to transmit data when the first station transmits the first uplink data, and wherein the third station is the second station, or the third station is at least one station other than the first station and the second station; and
receiving the first uplink data from the first station.

2. The method according to claim 1, wherein
transmitting the trigger frame comprises transmitting the trigger frame in a first bandwidth;
transmitting the first information comprises transmitting the first information in a second bandwidth, wherein the first bandwidth is smaller than the second bandwidth;
receiving the first uplink data from the first station comprises receiving the first uplink data from the first station in the first bandwidth.

3. The method according to claim 1 or 2, wherein transmitting the first information comprises:
transmitting the first information when a short interframe space SIFS elapses after completion of transmission of the trigger frame.

4. The method according to any one of claims 1 to 3, wherein
the first information comprises a legacy preamble or a short frame, and the short frame comprises the legacy preamble and a frame body.

5. The method according to claim 4, wherein
the legacy preamble comprises a legacy short training field L-STF, a legacy long training field L-LTF, and a legacy signal field L-SIG; or
the legacy preamble comprises the L-STF, the L-LTF, the L-SIG, a binary phase shift keying marker BPSK-mark1, and a BPSK-mark2.

6. The method according to claim 4 or 5, wherein the short frame comprises clear to send CTS, a null data packet NDP, or an acknowledgment ACK.

7. The method according to any one of claims 1 to 6, wherein the method further comprises:
transmitting an excitation signal, and/or the trigger frame is further used to trigger the second station to transmit an excitation signal, wherein the excitation signal is used to provide the first station with energy for transmitting the first uplink data.

8. The method according to any one of claims 1 to 7, wherein that the trigger frame is used to trigger the first station to transmit the first uplink data comprises:
when the first information is transmitted by the access point device, the trigger frame comprises at least one user information field, wherein one user information field of the at least one user information field comprises a user identification field, the user identification field is used to indicate the first station, and the trigger frame is used to indicate the first station to transmit the first uplink data.

9. The method according to any one of claims 1 to 8, wherein that the trigger frame is further used to trigger the second station to transmit the first information comprises:
the trigger frame comprises at least one user information field, wherein one user information field of the at least one user information field comprises a user identification field and a user type field, the user identification field is used to indicate the second station, and the user type field is used to indicate to transmit the first information.

10. The method according to claim 8 or 9, wherein at least two fields among other fields other than the user identification field in the user information field are reserved fields.

11. The method according to any one of claims 1 to 10, wherein a common information field of the trigger frame comprises a trigger type field, a value of the trigger type field is a first value, and the first value is used to indicate that the trigger frame is used to trigger a station incapable of transmitting the first information to transmit uplink data.

12. The method according to claim 11, wherein a value range of the first value is [9, 15].

13. The method according to claim 11 or 12, wherein the common information field further comprises an uplink length field for indicating a length of the first uplink data, wherein
at least six fields among other fields other than the trigger type field and the uplink length field in the common information field are reserved fields.

14. The method according to any one of claims 1 to 7, wherein the trigger frame comprises at least one first user information field, each first user information field of the at least one first user information field is used to indicate a station incapable of transmitting the first information, one first user information field of the at least one first user information field is used to indicate the first station, and the trigger frame is used to indicate the first station to transmit the first uplink data.

15. The method according to any one of claims 1 to 7 and 14, wherein
the trigger frame comprises at least one second user information field, each second user information field of the at least one second user information field is used to indicate one station that is used to transmit the first information and/or that is used to transmit an excitation signal to a station incapable of transmitting the first information, and one second user information field of the at least one second user information field is used to indicate the second station.

16. The method according to any one of claims 1 to 15, wherein the first uplink data uses a first spreading code.

17. A communication method, applied to a first station, wherein the method comprises:
receiving a trigger frame, wherein the trigger frame is used to trigger the first station to transmit first uplink data; and
transmitting the first uplink data after expiration of first duration, wherein the first duration is greater than or equal to duration of first information, the first information is used to cause a third station not to transmit data when the first station transmits the first uplink data, and the third station is a second station, or the third station is at least one station other than the first station and the second station.

18. The method according to claim 17, wherein
the first duration is the duration of the first information; or
the first duration is a sum of the duration of the first information and a SIFS.

19. The method according to claim 17 or 18, wherein that the trigger frame is used to trigger the first station to transmit the uplink data comprises:
the trigger frame comprises at least one user information field, wherein one user information field of the at least one user information field comprises a user identification field, the user identification field is used to indicate the first station, and the trigger frame is used to indicate the first station to transmit the first uplink data.

20. A communication method, applied to a second station, wherein the method comprises:
receiving a trigger frame, wherein the trigger frame is used to trigger the second station to transmit first information and/or an excitation signal, the first information is used to cause a third station not to transmit data when the first station transmits first uplink data, the excitation signal is used to provide the first station with energy for transmitting the first uplink data, and the third station is the second station, or the third station is at least one station other than the first station and the second station; and
transmitting the first information and/or the excitation signal.

21. The method according to claim 20, wherein that the trigger frame is used to trigger the second station to transmit the first information and/or the excitation signal comprises:
the trigger frame comprises at least one user information field, wherein one user information field of the at least one user information field comprises a user identification field and a user type field, the user identification field is used to indicate the second station, and the user type field is used to indicate to transmit the first information and/or the excitation signal.

22. The method according to any one of claims 17 to 21, wherein a common information field of the trigger frame comprises a trigger type field, a value of the trigger type field is a first value, and the first value is used to indicate that the trigger frame is used to trigger a station incapable of transmitting the first information to transmit uplink data.

23. The method according to claim 22, wherein a value range of the first value is [9, 15].

24. The method according to any one of claims 17 to 23, wherein the first information comprises a legacy preamble or a short frame, and the short frame comprises the legacy preamble and a frame body.

25. The method according to claim 24, wherein
the legacy preamble comprises an L-STF, an L-LTF, and an L-SIG; or
the legacy preamble comprises an L-STF, an L-LTF, an L-SIG, a BPSK-mark1, and a BPSK-mark2.

26. The method according to claim 24 or 25, wherein the short frame comprises CTS, an NDP, or an ACK.

27. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 16, or enable the communication apparatus to perform the method according to any one of claims 17 to 26.

28. A computer-readable storage medium, wherein the computer-readable storage medium is configured to store a computer program, and when the computer program is run on a computer, the computer is enabled to perform the method according to any one of claims 1 to 16, or the computer is enabled to perform the method according to any one of claims 17 to 26.

29. A computer program product, wherein the computer program product comprises a computer program, and when the computer program is run on a computer, the computer is enabled to perform the method according to any one of claims 1 to 16, or the computer is enabled to perform the method according to any one of claims 17 to 26.

30. A chip system, wherein the chip system comprises:
a processor and an interface, wherein the processor is configured to invoke instructions from the interface and run the instructions, and when the processor executes the instructions, the method according to any one of claims 1 to 16 is implemented, or the method according to any one of claims 17 to 26 is implemented.
